# EUROPEAN PATENT APPLICATION

(11) **EP 4 776 750 A2**
(43) Date of publication of application: **15.07.2026**
(21) Application number: 26168656.2
(22) Date of filing: 13.08.2013
(51) Int. Cl.: H04W 84/18

(54) **MEDIA-CONTENT HANDOVER BETWEEN A MOBILE DEVICE AND AN EXTERNAL DEVICE**

(30) Priority: 24.08.2012 JP 2012184988
(62) Divisional of application: 20168902.3
(71) Applicant: Sony Group Corporation, Tokyo 108-0075 (JP)
(72) Inventor: OIWA, Takuma, Tokyo, 108-0075 (JP); MIYAMOTO, Yoshiyuki, Tokyo, 108-0075 (JP)
(74) Representative: MFG Patentanwälte Meyer-Wildhagen Meggle-Freund Gerhard PartG mbB

(57) **Abstract**

There is provided an information processing system including a processor configured to control switching an output destination of content reproduced by a mobile device when the mobile device is within proximity, or passes within proximity, of a second device.

## Description

### Technical Field

The present disclosure relates to an information processing system, an information processing method, and a program.

The present disclosure contains subject matter related to that disclosed in Japanese Priority Patent Application JP 2012-184988 filed in the Japan Patent Office on August 24, 2012, the entire content of which is hereby incorporated by reference.

### Background Art

In the technology disclosed in PTL 1 and PTL 2, a first communication device acquires an address for wireless communication from a second communication device by performing NFC communication with the second communication device, and establishes a communication path with the second communication device (or a third communication device) by using this address. Afterwards, the first communication device outputs content information to the second communication device (or the third communication device).

### Citation List

### Patent Literature

PTL 1: JP 2004-364145A
PTL 2: JP 2007-74598A

### Summary

### Technical Problem

However, in the above described technology, in order for a user to change an output destination of the content information from the second communication device (or third communication device) to another output destination, it may be necessary to perform an input operation using a menu screen or the like. Accordingly, there has been a demand for technology which is capable of more easily changing the output destination of content information.

### Solution to Problem

According to an embodiment of the present disclosure, there is provided a control system comprising a processor configured to control switching an output destination of content reproduced by a mobile device when the mobile device is within proximity, or passes within proximity, of a second device.

According to an embodiment of the present disclosure, there is provided content presentation method comprising switching an output destination of content reproduced by a mobile device when the mobile device is within proximity, or passes within proximity, of a second device.

According to an embodiment of the present disclosure, there is provided a non-transitory computer-readable medium storing a computer-readable program for implementing a content presentation method, the method comprising switching an output destination of content reproduced by a mobile device when the mobile device is within proximity, or passes within proximity, of a second device.

According to the present disclosure, the information processing apparatus changes the voice output destination to the first output control section or the second output control section, in the case where proximity to the transmission section is detected.

### Advantageous Effects of Invention

According to the above described present disclosure, a user can more easily change the output destination of content information.

### Brief Description of Drawings

[fig.1] FIG. 1 is an outline view for describing an experience 1 according to the embodiments of the present disclosure.
[fig.2]FIG. 2 is an outline view for describing the experience 1.
[fig.3]FIG. 3 is an outline view for describing an experience 2.
[fig.4]FIG. 4 is an outline view for describing the experience 2.
[fig.5]FIG. 5 is an outline view for describing an experience 3.
[fig.6]FIG. 6 is an outline view for describing the experience 3.
[fig.7]FIG. 7 is a block diagram which shows an example of a configuration of a mobile device.
[fig.8]FIG. 8 is a block diagram which shows an example of a configuration of an audio device.
[fig.9]FIG. 9 is a block diagram which shows an example of a configuration of an audio device.
[fig.10]FIG. 10 is a flow chart which shows the procedure of processes by the audio device.
[fig.11] FIG. 11 is a flow chart which shows the procedure of processes by the mobile device.
[fig. 12]FIG. 12 is a flow chart which shows the procedure of processes by the mobile device.
[fig. 13]FIG. 13 is a flow chart which shows the procedure of processes by the mobile device.
[fig. 14]FIG. 14 is a flow chart which shows the procedure of processes by the mobile device.
[fig. 15]FIG. 15 is a flow chart which shows the procedure of processes by the mobile device.
[fig. 16]FIG. 16 is a flow chart which shows the procedure of processes by the mobile device.
[fig. 17]FIG. 17 is a flow chart which shows the procedure of processes by the mobile device.
[fig. 18]FIG. 18 is a flow chart which shows the procedure of processes by the mobile device.
[fig. 19]FIG. 19 is a flow chart which shows the procedure of processes by the mobile device.
[fig.20]FIG. 20 is a flow chart which shows the procedure of processes by the mobile device.
[fig.21]FIG. 21 is a flow chart which shows the procedure of processes by the mobile device.
[fig.22]FIG. 22 is an explanatory diagram which shows an example of an image displayed on the mobile device.
[fig.23]FIG. 23 is an explanatory diagram which shows an example of an image displayed on the mobile device.
[fig.24]FIG. 24 is an explanatory diagram which shows an example of an image displayed on the mobile device.
[fig.25]FIG. 25 is an explanatory diagram which shows an example of an image displayed on the mobile device.
[fig.26]FIG. 26 is an explanatory diagram which shows an example of an image displayed on the mobile device.
[fig.27]FIG. 27 is an explanatory diagram which shows an example of an image displayed on the mobile device.
[fig.28]FIG. 28 is an explanatory diagram which shows an example of an image displayed on the mobile device.
[fig.29]FIG. 29 is an explanatory diagram which shows an example of an image displayed on the mobile device.
[fig.30]FIG. 30 is an explanatory diagram which shows an example of an image displayed on the mobile device.
[fig.31]FIG. 31 is an explanatory diagram which shows an example of an image displayed on the mobile device.
[fig.32]FIG. 32 is an explanatory diagram which shows an example of an image displayed on the mobile device.
[fig.33]FIG. 33 is an explanatory diagram which shows an example of an image displayed on the mobile device.

### Description of Embodiments

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that the description will be given in the following order.
1. Outline of Each Experience
   1-1. Experience 1
   1-2. Experience 2
   1-3. Experience 3
2. Configuration of the Mobile Device
3. Configuration of the Audio Device
4. Procedure of Processes by the Mobile Device and the Audio Device
   4-1. Basic processes related to the experience 1
   4-2. Basic processes related to the experience 2
   4-3. Basic processes related to the experience 3
   4-4. Processes at the time when earphones are taken off in the experience 1
   4-5. Processes of fade-in and fade-out in the experience 1
   4-6. Processes of fade-in and fade-out in the experience 2
   4-7. Processes of fade-in and fade-out in the experience 3
   4-8. Volume setting processes at the time of communication path establishment (at the time of connection)
   4-9. Volume setting processes at the time of communication path disconnection
   4-10. Modified example related to power supply on processes of the audio device

### <1. Outline of Each Experience>

A mobile device (information processing apparatus) 100 and audio devices 200 and 300 according to the present embodiment can provide a user with experiences 1 to 3, which are described hereinafter. Accordingly, first an outline of the experiences 1 to 3 will be described.

### (1-1. Experience 1)

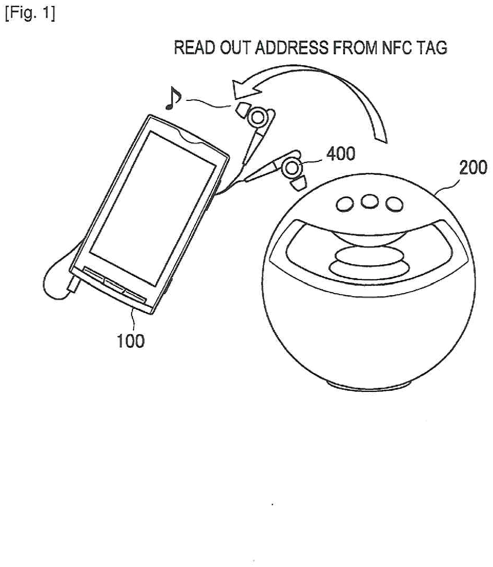

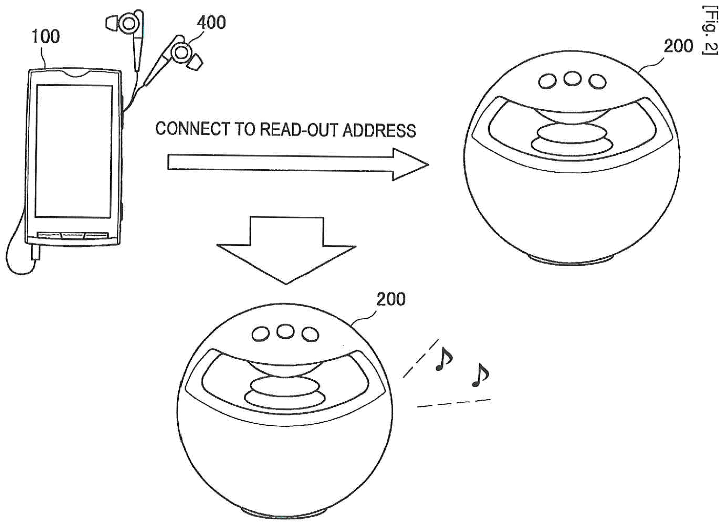

FIGS. 1 and 2 are outline views which describe the experience 1. The mobile device 100 includes a reader/writer for NFC (Near Field Communication) communication and a wireless communication section for wireless communication, and can perform NFC communication and wireless communication. Note that the wireless communication of the present embodiment means wireless communication with a communicable range wider than that of NFC communication.

On the other hand, the audio device 200 has an embedded NFC tag, and includes a wireless communication section for wireless communication. An address (identification information) for wireless communication of the audio device 200 is recorded in the NFC tag. Therefore, the mobile device 100 and the audio device 200 can both perform NFC communication and wireless communication.

In the experience 1, the mobile device 100 outputs voice information (content information). In this example, earphones 400 are connected to the mobile device 100, and voice information is output from the earphones 400.

A user returns home while listening to voice information with the earphones 400, and brings the mobile device 100 close to (in contact with) the audio device 200, as shown in FIG. 1. On the other hand, the mobile device 100 regularly performs polling (transmission of activation information) by using activation information for NFC tag activation. Therefore, when the user brings the mobile device 100 close to the audio device 200, the NFC tag of the audio device 200 is activated by the activation information. Then, the NFC tag transmits NFC information, which includes address information for wireless communication, to the mobile device 100. On the other hand, the power supply of the audio device 200 is turned on in accordance with the activation of the NFC tag. The mobile device 100 recognizes the address of the audio device 200 by extracting (reading out) the address information from the NFC information.

Then, as shown in FIG. 2, the mobile device 100 attempts a connection (establish a communication path) with the audio device 200, based on the read-out address. In the case where a communication path is established, the mobile device 100 changes a voice output destination from the mobile device 100 (in detail, an output control section in the mobile device 100) to the audio device 200 (in detail, an output control section in the audio device 200). Then, the mobile device 100 transmits the voice information to the audio device 200 by wireless communication. The audio device 200 outputs the voice information.

In this way, the user can output voice information from the audio device 200 by simply bringing the mobile device 100 close to the audio device 200. Therefore, for example, after purchasing the audio device 200, the user can output voice information from the audio device 200 without performing any special setting operations.

### (1-2. Experience 2)

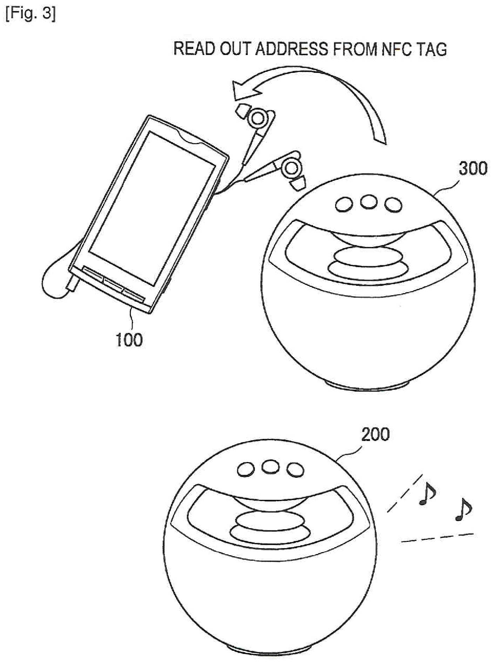

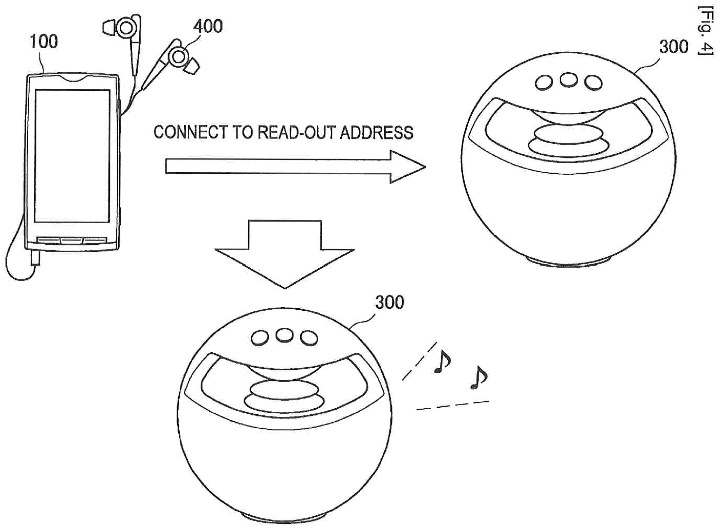

FIGS. 3 and 4 are outline views for describing the experience 2. In the experience 2, the audio device 200 outputs the voice information.

In the case where the user wants to change the voice output destination from the audio device 200 to the audio device 300, the user brings the mobile device 100 close to the audio device 300. Here, the audio device 300 has functions similar to those of the audio device 200.

When the user brings the mobile device 100 close to the audio device 300, the NFC tag of the audio device 300 is activated by the activation information. Then, the NFC tag transmits the NFC information, which includes address information for wireless communication, to the mobile device 100. On the other hand, the power supply of the audio device 300 is turned on in accordance with the activation of the NFC tag. The mobile device 100 recognizes the address of the audio device 300 by extracting the address information from the NFC information.

Then, the mobile device 100 disconnects the communication path with the audio device 200, and returns the voice output destination to the mobile device 100. In this way, the audio device 200 stops output of the voice information. Then, the mobile device 100 attempts a connection (establish a communication path) with the audio device 300, based on the read-out address. In the case where a communication path with the audio device 300 is established, the mobile device 100 changes the voice output destination from the mobile device 100 to the audio device 300 (in detail, an output control section in the audio device 300). Then, the mobile device 100 transmits the voice information to the audio device 300 by wireless communication. The audio device 300 outputs the voice information.

In this way, the user can substantially change the voice output destination from the audio device 200 to the audio device 300 by simply bringing the mobile device 100 close to the audio device 300.

### (1-3. Experience 3)

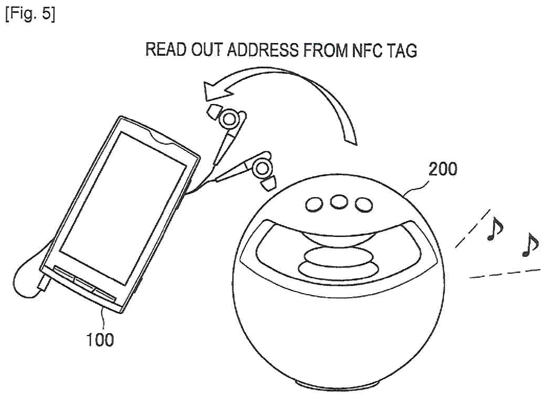

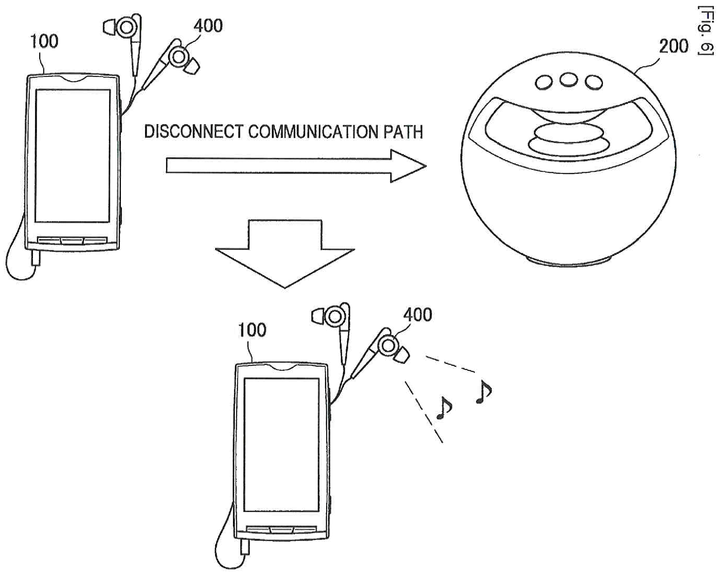

FIGS. 5 and 6 are outline views for describing the experience 3. In the experience 3, the audio device 200 outputs the voice information.

In the case where the user wants to return the voice output destination from the audio device 200 to the mobile device 100, the user brings the mobile device 100 close to the audio device 200.

When the user brings the mobile device 100 close to the audio device 200, the NFC tag of the audio device 200 is activated by the activation information. Then, the NFC tag transmits the NFC information, which includes address information for wireless communication, to the mobile device 100. The mobile device 100 recognizes the address of the audio device 200 by extracting the address information from the NFC information.

Then, the mobile device 100 disconnects the communication path with the audio device 200, as shown in FIG. 6, and changes the voice output destination from the audio device 200 to the mobile device 100. In this way, the audio device 200 stops output of the voice information. In addition, the mobile device 100 starts output of the voice information. Here, since the earphones 400 are connected to the mobile device 100, the voice information is output from the earphones 400.

In this way, in the case where the user wants to go out while listening to voice information, for example, the user can return the voice output destination from the audio device 200 to the mobile device 100 by simply bringing the mobile device 100 close to the audio device 200.

In the present embodiment as described above, since the user can change the voice output destination by simply brining the mobile device 100 close to either the audio device 200 or the audio device 300, the user can more easily change the voice output destination. That is, in the present embodiment, usability related to a change of a voice output destination can be improved. In this way, the user can continue to enjoy voice information even in the case where the user has changed the voice output destination (it may not be necessary to stop output of voice information for each change of voice output destination).

### <2. Configuration of the Mobile Device>

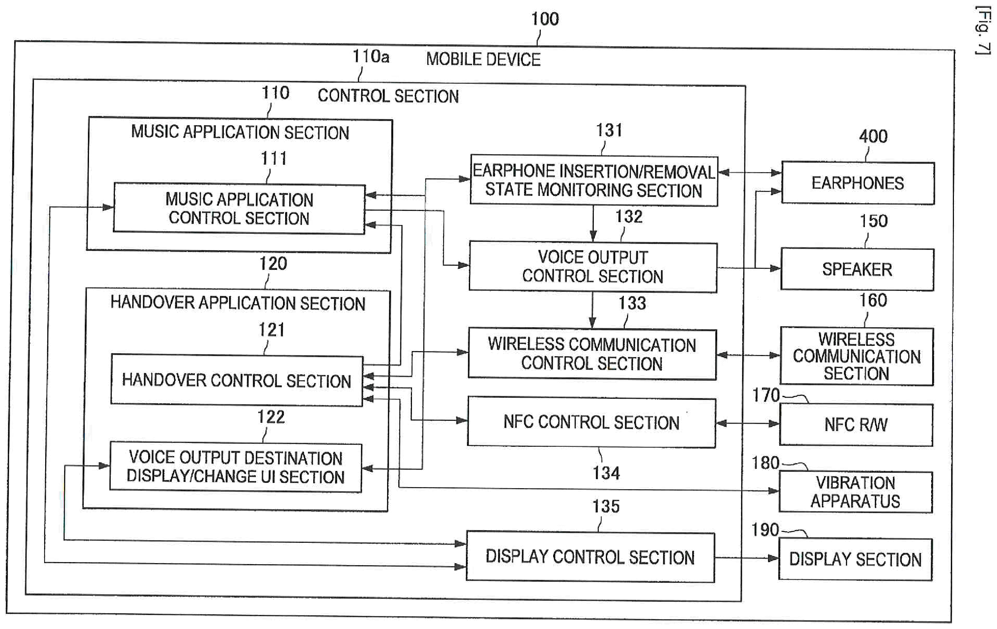

Next, the configuration of the mobile device 100 will be described based on FIG. 7. The mobile device 100 is capable of performing NFC communication, wireless communication, and output of voice information or the like, and is a device capable of being carried by a user. For example, a smartphone, a mobile phone, a portable music player or the like can be included as the mobile device 100.

The mobile device 100 includes a control section 110a, earphones (an information output medium) 400, a speaker 150, a wireless communication section (transmission section) 160, an NFC reader/writer (proximity determination section) 170, a vibration apparatus 180, and a display section 190. The control section 110a includes a music application section 110, a handover application section 120, an earphone insertion/ removal state monitoring section 131, a voice output control section (output control section) 132, a wireless communication control section 133, an NFC control section 134, and a display control section 135.

Note that the mobile device 100 has a hardware configuration such as a CPU, a ROM, a RAM, various memories, earphones, a speaker, a communication apparatus and the like. A program for implementing each of the above described constituent elements in the mobile device 100 is recorded in the ROM. The CPU reads and executes the program recorded in the ROM. Therefore, each of the above described constituent elements, and in particular, the control section 110a, is implemented by these hardware configurations. Note that the constituent elements other than the music application section 110 and the handover application section 120 in the control section 110a may be implemented by an operating system (OS) which controls the entire mobile device 100.

The music application section 110 includes a music application control section 111. The music application control section 111 acquires voice information (music information or the like), and outputs the voice information to the voice output control section 132. Note that the music application control section 111 may acquire voice information stored in advance in the mobile device 100, or may acquire voice information from a network.

The music application control section 111 continues output of the voice information, except for predetermined cases. For example, the music application control section 111 continues output of the voice information, even in the case where the voice output from each device is temporarily interrupted due to a change of voice output destination. Here, for example, the case where the earphones 400 are unplugged from the mobile device 100 or the like is included as a predetermined case. Therefore, in the case where output from each device is restarted, each device outputs the voice information advanced only by the interrupted period. In this way, the user can listen to voice information with a reduced feeling of discomfort. Needless to say, the music application control section 111 may temporarily stop output of the voice information each time the voice output destination is changed.

Further, the music application control section 111 generates various images related to output (playback) of the voice information, and outputs the images to the display control section 135.

The handover application section 120 includes a handover control section 121 and a voice output destination display/change UI (User Interface) section 122. The handover control section 121 performs various controls related to handover (change of the voice output destination). The voice output destination display/change UI section 122 generates various images related to handover, and outputs the images to the display control section 135.

The earphone insertion/removal state monitoring section 131 monitors (detects) an insertion/removal state (unplugged/plugged in state) of the earphones 400, and outputs monitoring result information related to a monitoring result to the music application control section 111, the voice output control section 132, and the voice output destination display/change UI section 122.

The voice output control section 132 determines that the output destination of the voice information is one of the earphones 400, the speaker 150, and the wireless communication control section 133, and outputs the voice information to the determined output destination. Generally, the voice output control section 132 sets the voice output destination to be the earphones 400 in the case where the earphones 400 are connected to the voice output control section 132 (that is, the mobile device 100), and sets the voice output destination to be the speaker 150 in the case where the earphones 400 are not connected to the voice output control section 132. Further, the voice output control section 132 determines that the voice output destination is the wireless communication control section 133 by a request from the handover application section 120. Note that the volume is set in the voice output control section 132, and the voice information provided from the music application control section 111 is output to the earphones 400 (or the speaker 150) or the like with this volume set in the voice output control section 132. The volume set in the voice output control section 132 may be adjusted by a user operation.

The wireless communication control section 133 performs various processes related to the above described wireless communication. Note that there are cases, such as described later, were the wireless communication control section 133 outputs the voice information to the wireless communication section 160. In this case, the wireless communication control section 133 outputs the voice information with the volume set in the voice output control section 132 to the wireless communication section 160. The NFC control section 134 performs various processes related to the above described NFC communication. The display control section 135 displays images provided from the music application control section 111 and the voice output destination display/ change UI section 122 on the display section 190.

The earphones 400 and the speaker 150 output voice information. The wireless communication section 160 performs wireless communication with the audio devices 200 and 300, by control with the wireless communication control section 133. The NFC reader/writer 170 performs NFC communication with the audio devices 200 and 300, by control with the NFC control section 134. The vibration apparatus 180 vibrates the mobile device 100 by control with the handover control section 121. The display section 190 displays various images by control with the display control section 135.

### <3. Configuration of the Audio Device>

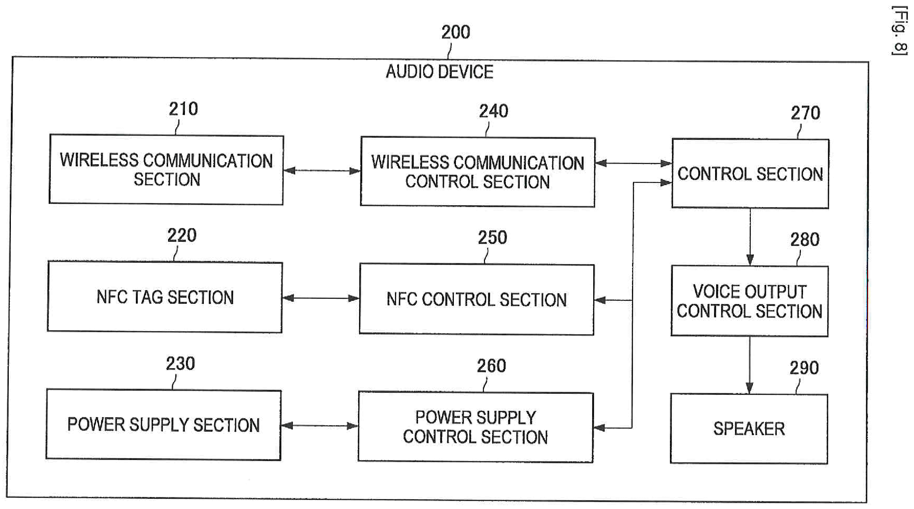

Next, the configuration of the audio device 200 will be described based on FIG. 8. The audio device 200 is an audio device capable of performing NFC communication, wireless communication, and output of voice information or the like. For example, a speaker compatible with wireless communication, earphones, a system component, a home theater, in-vehicle audio or the like can be included as the audio device 200. The audio device 200 includes a wireless communication section 210, an NFC tag section (transmission section) 220, a power supply section 230, a wireless communication control section 240, an NFC control section 250, a power supply control section 260, a control section 270, a voice output control section 280, and a speaker 290.

Note that the audio device 200 has a hardware configuration such as a CPU, a ROM, a RAM, various memories, a speaker, a communication apparatus and the like. A program for implementing each of the above described constituent elements in the audio device 200 is recorded in the ROM. The CPU reads and executes the program recorded in the ROM. Therefore, each of the above described constituent elements is implemented by these hardware configurations.

The wireless communication section 210 performs wireless communication with the mobile device 100, by control with the wireless communication control section 240. In this way, the wireless communication section 210 acquires voice information from the mobile device 100. This voice information is output to the speaker 290 via the wireless communication control section 240, the control section 270, and the voice output control section 280.

The NFC tag section 220 stores an address (identification information) for identifying the voice output control section 280 (that is, the audio device 200), and performs NFC communication with the mobile device 100, by control with the NFC control section 250.

The power supply section 230 is constituted of a plug capable of connecting to an outlet, a power supply cord, a power supply switch and the like. The power supply section 230 is controlled to be turned on or off by the power supply control section 260. The wireless communication control section 240 performs various processes related to wireless communication. The NFC control section 250 performs various processes related to NFC communication.

The control section 270 controls the entire audio device 200. The voice output control section 280 outputs voice information provided from the wireless communication section 210 to the speaker 290. Here, the volume is set in the voice output control section 280, and the voice output control section 280 outputs voice information provided from the wireless communication section 210 to the speaker 290 with this set volume. The speaker 290 outputs voice information. Note that the volume of voice information finally output from the speaker 290 is a value obtained by multiplying the volume set in the voice output control section 132 of the mobile device 100 and the volume set in the voice output control section 280. The volume set in the voice output control section 280 may be adjusted by a user operation.

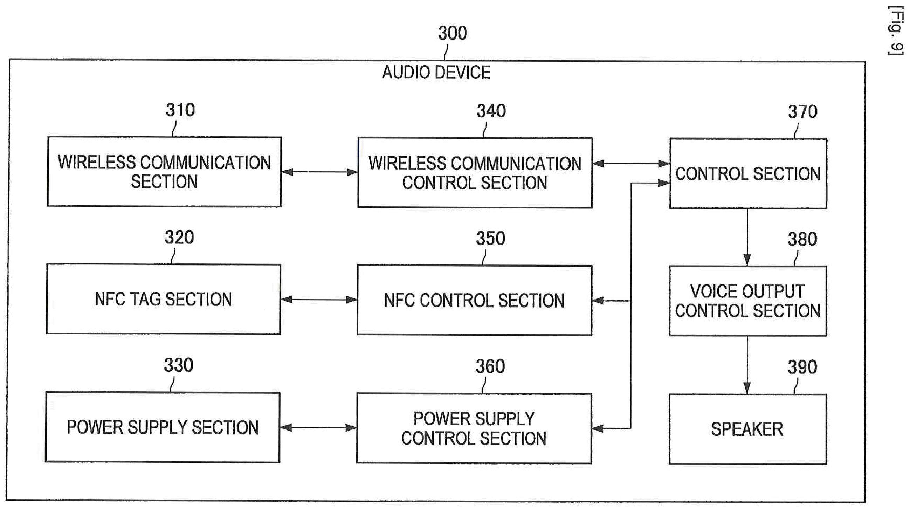

FIG. 9 is a block diagram which shows the configuration of the audio device 300. The audio device 300 is an audio device capable of performing NFC communication, wireless communication, and output of content information or the like. The audio device 203 includes a wireless communication section 310, an NFC tag section 320, a power supply section 330, a wireless communication control section 340, an NFC control section 350, a power supply control section 360, a control section 370, a voice output control section 380, and a speaker 390. Since the configuration of the audio device 300 is similar to that of the audio device 200, the description of the audio device 300 will be omitted.

### <4. Procedure of Processes by the Mobile Device and the Audio Device>

Next, the procedure of processes by the mobile device 100 and the audio devices 200 and 300 will be described.

### (4-1. Basic processes related to the experience 1)

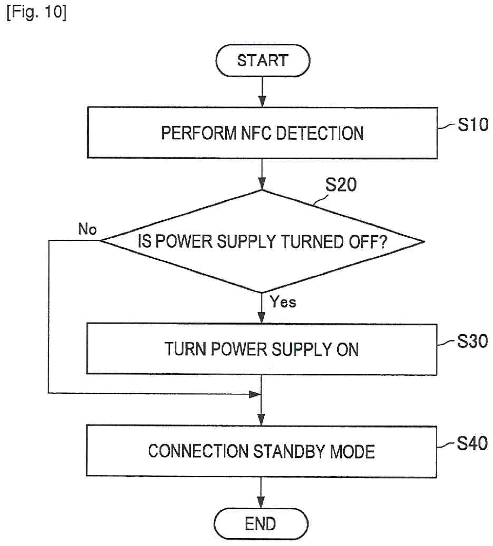

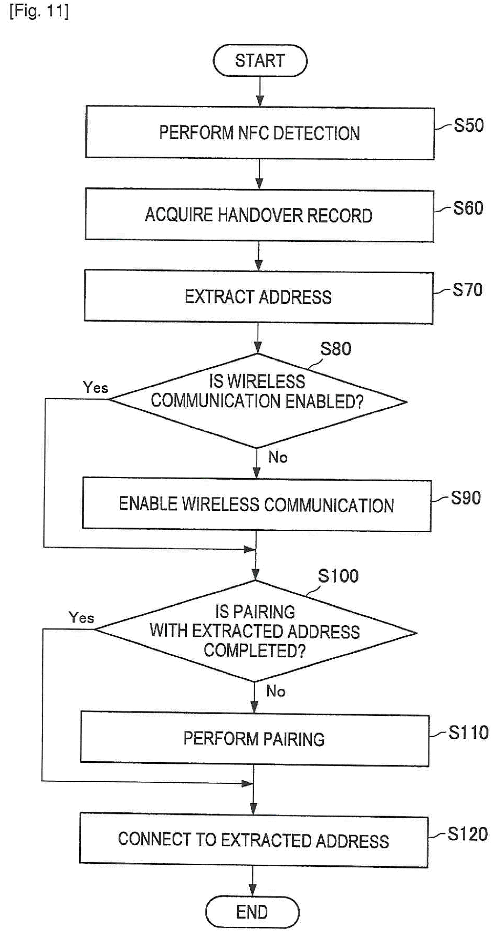

First, the basic process of the experience 1 will be described based on FIGS. 10 and 11. FIG. 10 shows the processes performed by the audio device 200. As an assumption, a user is listening to voice information by using the mobile device 100.

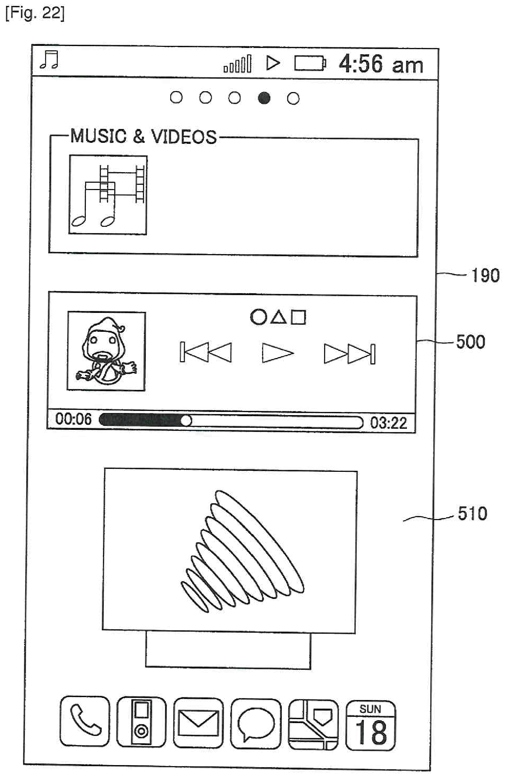

That is, as shown in FIG. 1, the earphones 400 are connected to the mobile device 100, and the music application control section 111 outputs voice information to the voice output control section 132. Note that the music application control section 111 continuously outputs the voice information, except for the cases described later. The voice output control section 132 outputs the voice information to the earphones 400. On the other hand, the music application control section 111 generates a voice information image, which shows the voice information in the present output, and outputs the voice information image to the display control section 135. The display control section 135 displays the voice information image superimposed on a background image, which shows various types of information, on the display section 190. A display example is shown in FIG. 22. In this example, a voice information image 500 is superimposed on a background image 510.

In step S10, the user brings the mobile device 100 close to the audio device 200, as shown in FIG. 1. Here, the NFC reader/writer 170 of the mobile device 100 regularly performs polling at fixed intervals by using activation information for NFC tag activation. The timing at which the mobile device 100 performs polling is not particularly limited. For example, the mobile device 100 may perform polling in the case where some image (for example, the image shown in FIG. 22) is displayed on the display section 190 (the screen is on). This is done in order to suppress the battery consumption. Note that the mobile device 100 may also perform polling in the case where an image is not displayed on the display section 190 (the screen is off). In this case, it is preferable that the interval of polling is longer than that of polling when the screen is on. Further, the mobile device 100 may perform polling while executing a music application. In this case, the battery consumption can also be suppressed. The timing of polling is set by the NFC control section 134.

Further, from the viewpoint of suppressing the battery consumption, the NFC reader/ writer 170 may be built into the audio device 200, and an NFC tag section may be built into the mobile device 100.

In the case where activation information is received, the NFC tag section 220 is activated by the activation information. Then, the NFC tag section 220 determines that the NFC reader/writer 170 has been brought close (NFC detection), and outputs proximity detection information to that effect to the NFC control section 250. In addition, the NFC tag section 220 transmits NFC information, which includes address information and audio device information (information which shows the name of the audio device 200), to the mobile device 100. On the other hand, the NFC reader/writer 170 receives the NFC information. In this way, the NFC reader/writer 170 detects proximity of the NFC tag section 220.

In step S20, the NFC control section 250 determines whether or not the power supply section 230 has been turned on. In the case where it is determined that the power supply section 230 has been turned on, the NFC control section 250 proceeds to step S40, and in the case where it is determined that the power supply section 230 has not been turned on, the NFC control section 250 proceeds to step S30.

In step S30, the NFC control section 250 performs a power supply on request to the power supply control section 260, and the power supply control section 260 turns on the power supply section 230. In this way, the audio device 200 is activated. In step S40, the control section 270 shifts to a wireless communication connection standby mode. Afterwards, the audio device 200 ends the processes of FIG. 10.

On the other hand, the mobile device 100 performs the processes shown in FIG. 11. In step S50, the NFC reader/writer 170 detects proximity of the NFC tag section 220, that is, proximity of the audio device 200, by acquiring the NFC information. Then, the NFC reader/writer 170 outputs the NFC information to the NFC control section 134, and the NFC control section 134 outputs the NFC information to the handover control section 121.

In step S60, the handover control section 121 acquires a handover record. Here, the handover record is a table which associates address information of an audio device, to which pairing, which is described later, has been successful, with the name of the audio device, and is managed by the handover application section 120. Specifically, the handover record is stored in, for example, a recording medium of the mobile device 100, and is read-out by the handover control section 121. The handover record may be recorded on a network.

In step S70, the handover control section 121 extracts address information from the NFC information, and outputs the address information and the handover record to the wireless communication control section 133. In step S80, the wireless communication control section 133 determines whether or not wireless communication is enabled. In the case where it is determined that wireless communication is enabled, the wireless communication control section 133 proceeds to step S100, and if it is determined that wireless communication is not enabled, the wireless communication control section 133 proceeds to step S90.

In step S90, the wireless communication control section 133 performs a process to enable wireless communication (for example, a process which activates the wireless communication section 160 or the like) and notifies this fact to the handover application section 120. The voice output destination display/change UI section 122 generates an enabling notification image, which informs that the process to enable wireless communication is being performed, and outputs the enabling notification image to the display control section 135. The display control section 135 displays the enabling notification image on the display section 190.

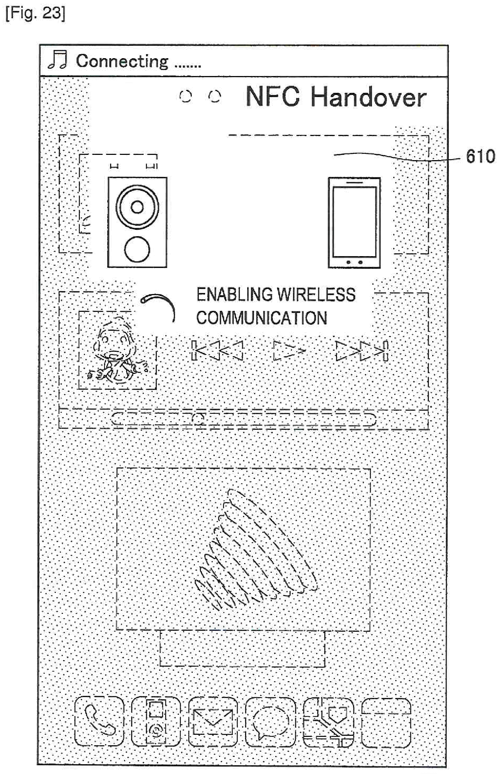

A display example is shown in FIG. 23. In this example, an enabling notification image 610 is displayed on the entire screen of the display section 190. In this example, the enabling notification image 610 includes text information for enabling wireless communication, and icons of the mobile device 100 and the audio device 200. Further, a background image 510 or the like is displayed semitransparent behind the enabling notification image 610. In FIG. 23, the semitransparent background image 510 or the like is shown by dotted hatching and dotted lines. In this way, the user can recognize that at least the NFC detection is completed, that is, that the mobile device 100 is appropriately held over (brought close to) the audio device 200, and can remove the mobile device 100 from the audio device 200. That is, the user can easily recognize the timing for removing the mobile device 100 from the audio device 200. Further, the user can also visually recognize the background image 510 or the like. For example, in the case where video information attached to voice information is viewed, the user can visually recognize the video information while changing the output destination of the voice information.

In particular, in this example, since the enabling notification image 610 is displayed on the entire screen of the display section 190, the user can more easily recognize the timing for removing the mobile device 100 from the audio device 200. Further, the user can easily understand what type of process is presently being performed, and what the user is to do (at this time, to standby). Note that the display section 190 can suppress the reduction of convenience for the user (such as other operations not being able to be performed), by ending the display of the enabling notification image 610 in a short amount of time. In this way, in the present embodiment, feedback is provided to the user by using a UI.

Note that the voice output control section 132 may output, from the speaker, voice information for notification in response to this display. Further, the handover control section 121 may vibrate the vibration apparatus 180 in response to this display. In the case where these processes are used together with an image display, the user can more easily recognize the timing for removing the mobile device 100 from the audio device 200. The mobile device 100 may selectively perform one of image display, voice output, and vibration. However, since the user listens to voice information from the music application control section 111, there is the possibility that a voice output will not be recognized. Accordingly, it is preferable that voice output is used along with another process (image display or vibration). The voice output control section 132 and the handover control section 121 may perform voice output and handover, even in the case where each of the notification images, which are described hereinafter, are displayed.

Further, even if the user once again brings the mobile device 100 close to the audio device 200, during the processes from step S90 onwards, the mobile device 100 may not perform a process in response to this proximity. That is, the mobile device 100 continuously performs the processes from step S90 onwards. In this way, since it becomes easier for the user to understand the present communication state of the mobile device 100, confusion from a proximity operation or the like is reduced. Note that in the case where the user once again brings the mobile device 100 close to the audio device 200, during the processes from step S90 onwards, the mobile device 100 may display text information, such as "operation in process" on the display section 190.

In step S100, the wireless communication control section 133 determines whether or not pairing with the audio device 200 shown by the address information is completed, based on the handover record. In the case where the address information is included in the handover record, the wireless communication control section 133 determines that pairing with the audio device 200 is completed, and in the case where the address information is not included in the handover record, the wireless communication control section 133 determines that pairing with the audio device 200 is not completed.

In the case where it is determined that pairing with the audio device 200 is completed, the wireless communication control section 133 proceeds to step S120, and in the case where it is determined that pairing with the audio device 200 is not completed, the wireless communication control section 133 proceeds to step S110.

In step S110, the wireless communication control section 133 starts pairing (for example, exchanging of address information or the like) with the wireless communication section 210 of the audio device 200, and notifies that pairing has started to the handover application section 120. Further, the wireless communication control section 133 sequentially notifies the progress condition of pairing to the handover application section 120.

The voice output destination display/change UI section 122 generates a pairing notification image, which notifies that pairing (a pair setting) is being performed, and outputs the pairing notification image to the display control section 135. The display control section 135 displays the pairing notification image on the display section 190.

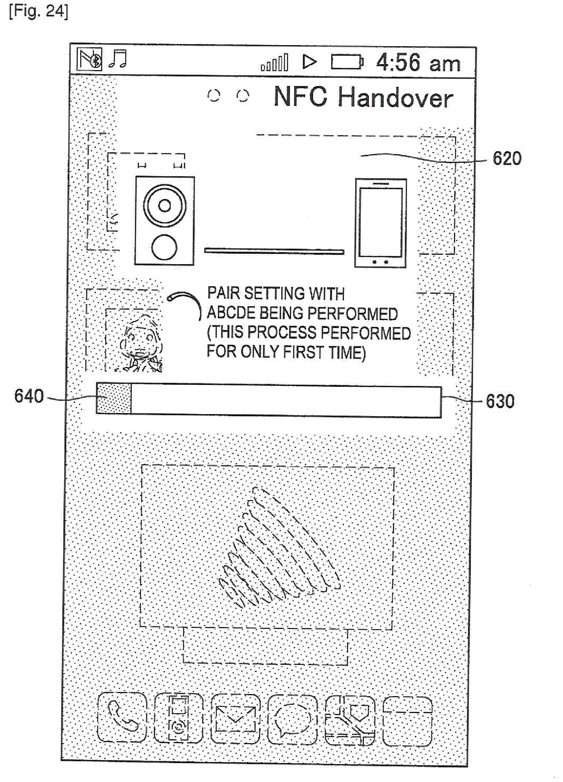

A display example is shown in FIG. 24. In this example, a pairing notification image 620 is displayed on the entire screen of the display section 190. In this example, the pairing notification image 620 contains text information indicating that pairing with the audio device 200 is being performed (in the example, "ABCDE"), an icon and frame image 630 of the mobile device 100 and audio device 200, and a gauge image 640. Information which shows that pairing is being performed only the first time is also included in the text information. The gauge image 640 extends to the right hand side as the pairing progresses, and the frame image 630 is filled with the gauge image 640 at the time when pairing is completed. In this way, the user can recognize that pairing has started, pairing is performed only for the first time, and to what extent pairing is completed. Therefore, the stress of waiting can be reduced for the user. Further, in the case where wireless communication is enabled before the processes of FIG. 11 have been performed, the user can recognize that the mobile device 100 is appropriately held over the audio device 200, by visually recognizing the pairing notification image 620.

In the case where pairing is completed, the wireless communication control section 133 registers the address information in the handover record, and proceeds to step S120.

In step S120, the wireless communication control section 133 starts a connection process (a process which establishes a communication path of wireless communication) with the audio device 200 shown by the address information, that is, the wireless communication section 210. On the other hand, the wireless communication control section 133 notifies that a connection with the audio device 200 is being performed to the handover application section 120.

The handover control section 121 requests to the voice output control section 132 to stop output of the voice information. In response to this, the voice output control section 132 stops output of the voice information provided from the music application control section 111. For example, the voice output control section 132 discards the voice information provided from the music application control section 111. However, the music application control section 111 continues output of the voice information.

The voice output destination display/change UI section 122 generates a connection notification image, which notifies that a connection process with the audio device 200 is being performed, and outputs the connection notification image to the display control section 135. The display control section 135 displays the connection notification image on the display section 190.

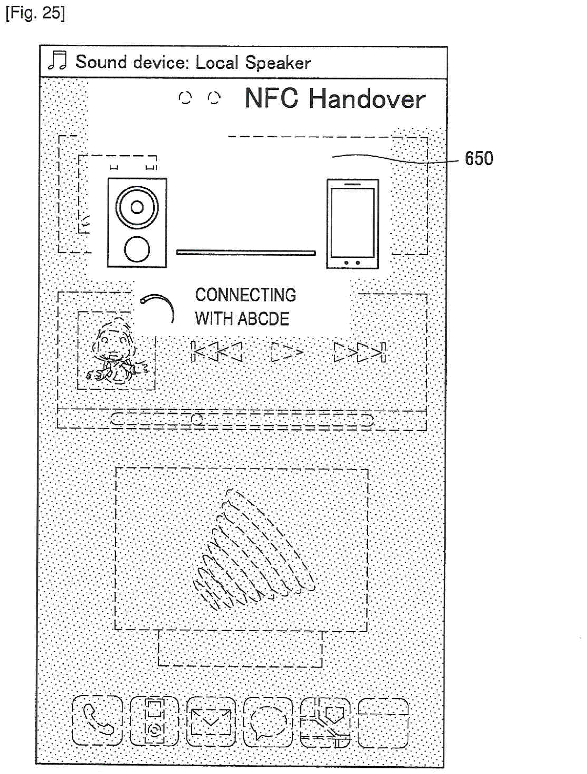

A display example is shown in FIG. 25. In this example, a connection notification image 650 is displayed on the entire screen of the display section 190. In this example, the connection notification image 650 contains text information indicating that a connection is being performed, and an icon of the mobile device 100 and audio device 200. In this way, the user can recognize that a connection has started. Further, in the case where wireless communication is enabled before the processes of FIG. 11 have been performed, and pairing has completed, the user can recognize that the mobile device 100 is appropriately held over the audio device 200, by visually recognizing the connection notification image 650.

In the case where the connection with the audio device 200 is completed, the wireless communication control section 133 notifies this fact to the handover application section 120. The voice output destination display/change UI section 122 generates a connection completion notification image, which informs that the connection with the audio device 200 is completed, and outputs the connection completion notification image to the display control section 135. The display control section 135 displays the connection completion notification image on the display section 190.

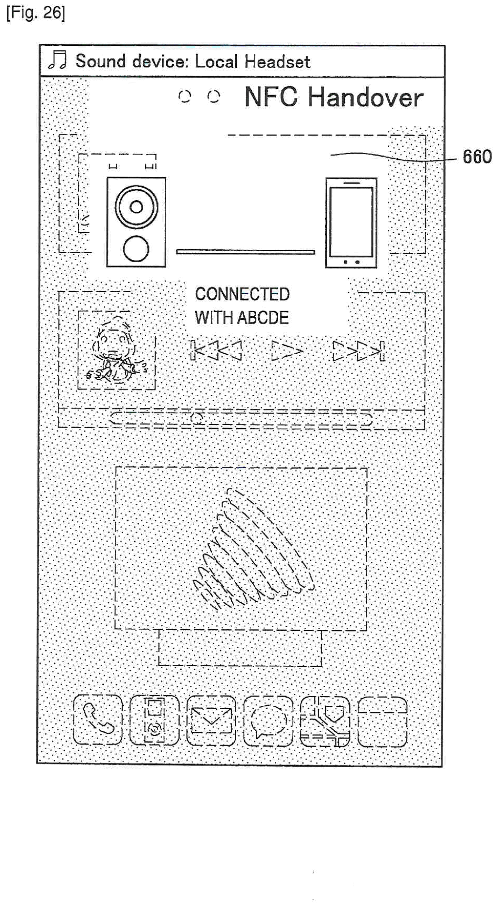

A display example is shown in FIG. 26. In this example, a connection completion notification image 660 is displayed on the entire screen of the display section 190. In this example, the connection completion notification image 660 contains text information for indicating that the connection is completed, and an icon of the mobile device 100 and audio device 200. In this way, the user can recognize that the connection is completed.

On the other hand, the handover control section 121 outputs, to the voice output control section 132, change request information for requesting to change the voice output destination from the present output destination (the earphones 400) to the wireless communication control section 133. In response to this, the voice output control section 132 changes the voice output destination of the voice information from the present output destination (earphones 400) to the wireless communication control section 133. The wireless communication control section 133 outputs the voice information to the wireless communication section 160 with the volume set in the voice output control section 132.

The wireless communication section 160 transmits the voice information to the wireless communication section 210. The wireless communication section 210 outputs the voice information to the voice output control section 280 via the wireless communication control section 240 and the control section 270. The voice output control section 280 outputs the voice information from the speaker 290 with the volume set in the voice output control section 280. In this way, the handover control section 121 changes the voice output destination from the voice output control section 132 in the mobile device 100 to the voice output control section 280 in the audio device 200.

Further, while the music application control section 111 outputs the voice information continuously to the voice output control section 132 during the connection process between the mobile device 100 and audio device 200, the voice output control section 132 discards this voice information. Therefore, output of the voice information from the mobile device 100 is interrupted. Then, in the case where a connection between the mobile device 100 and audio device 200 is established, the voice information is output from the audio device 200. Therefore, the audio device 200 outputs the voice information advanced only by the period to which output of the voice information has been interrupted, that is, the interruption period. By the above processes, the experience 1 is implemented.

Note that there are cases where the user brings the mobile device 100, which has the earphones 400 inserted, close to the audio device 200. In the present embodiment, in the case where a communication path with the audio device 200 is established, the mobile device 100 changes the voice output destination from the present output destination (the earphones 400) to the wireless communication control section 133. Then, the wireless communication control section 133 transmits the voice information to the audio device 200, regardless of the insertion/removal state of the earphones 400. Therefore, in the present embodiment, the user can output voice information from the audio device 200, even in the case where the mobile device 100, which has the earphones 400 inserted, is brought close to the audio device 200. That is, in the present embodiment, a priority of the voice output destination is higher for the audio device 200 connected with the mobile device 100 by NFC handover than that of the earphones 400. In this way, the user can implement the experience 1 with less trouble.

Note that in the case where the priority of the earphones 400 is higher than that of the audio device 200, the user is not able to change the voice output destination to the audio device 200, even if the mobile device 100, which has the earphones 400 inserted, is brought close to the audio device 200. Further, in this case, continuous voice information is output from the earphones 400. Therefore, in the case where the user removes the earphones 400 from his or her ears, it is assumed that it will be hard for the user to understand the reason why voice information is not output from the audio device 200. In this way, in the case where the priority of the earphones 400 is higher than that of the audio device 200, it may be time consuming for the user to implement the experience 1. However, in the present embodiment, since the priority of the audio device 200 is higher than that of the earphones 400, the user can implement the experience 1 with less trouble.

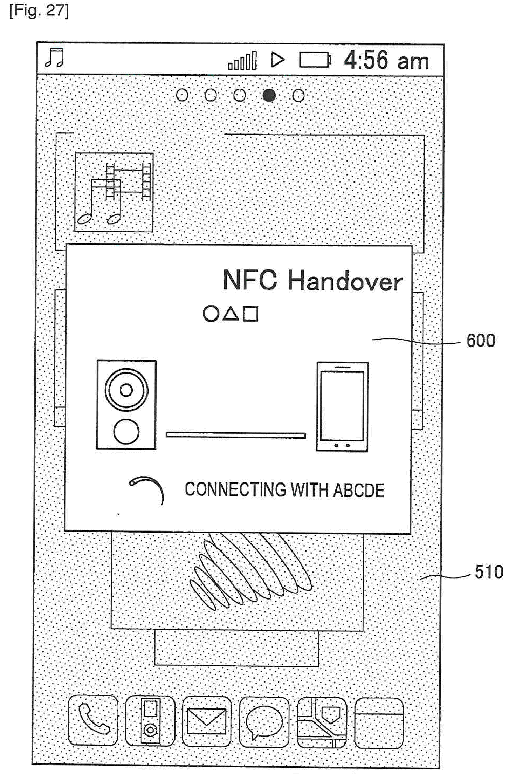

Here, some modified examples of the connection notification image will be described. FIG. 27 shows a connection notification image 600 which is a modified example of the connection notification image. In this modified example, the connection notification image 600 appropriates only part of the display screen of the display section 190. Further, the background image 510 or the like is displayed blacked out. In FIG. 27, the blacked out display is shown by hatching. According to this modified example, the user can understand what type of process is presently being performed and what the user is to do, and can visually recognize the background image 510 or the like.

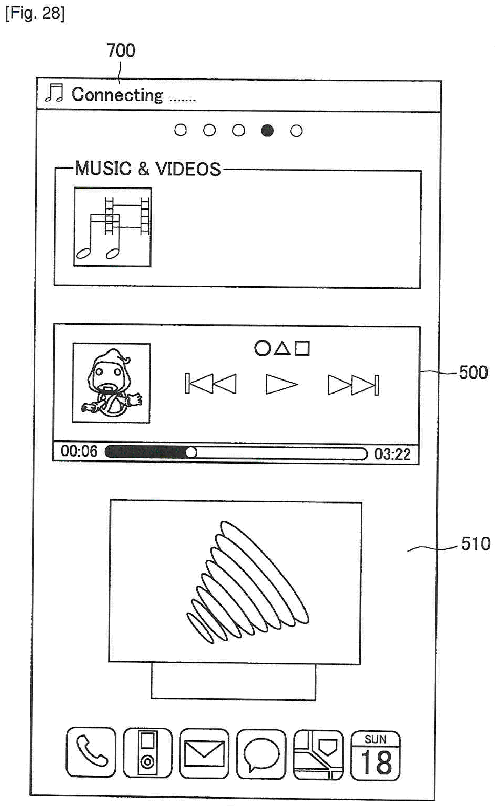

FIG. 28 shows a connection notification image 700 which is a modified example of the connection notification image. The connection notification image 700 is displayed on the top left hand side portion of the display section 190. The connection notification image 700 displays only the text information "Connecting..." indicating that a connection is being performed. That is, the connection notification image 700 presents the user with only the minimum necessary information. On the other hand, the background image 510 or the like is displayed as usual (similar to that of FIG. 22). In this way, the user can understand what type of process is presently being performed and what the user is to do, and can visually recognize the background image 510 or the like.

Note that the user may arbitrary determine, for example, which of the connection notification images 600, 650, and 700 is displayed as the connection notification image. For example, the user can select the connection notification image 600 or 650 in the case where the user is accustomed to handover, and can select the connection notification image 700 in the case where the user is not accustomed to handover. It is also possible for the above described modified examples to apply other notification images.

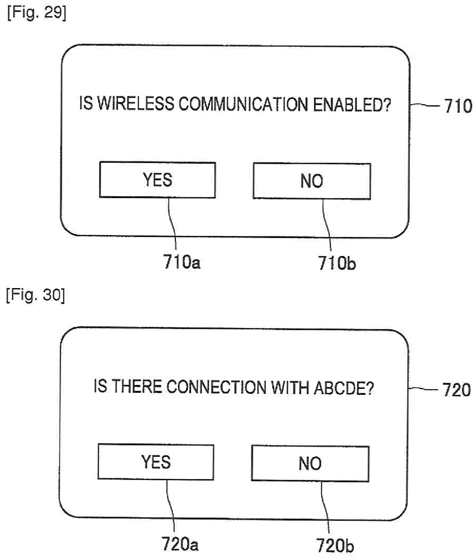

FIG. 29 shows a confirmation dialog image 710. That is, the voice output destination display/change UI section 122 may display the confirmation dialog image 710 on the display section 190 before the process of step S90 is performed, that is, before wireless communication is enabled. The confirmation dialog image 710 includes text information for inquiring whether or not wireless communication is enabled, a "yes" button 710a, and a "no" button 710b. In the case where the user selects the "yes" button 710a, the wireless communication control section 133 performs the process of step S90, and in the case where the user selects the "no" button 710b, the wireless communication control section 133 ends the processes shown in FIG. 11. In this way, the possibility of performing a connection not intended by the user (for example, a connection to another person's audio device) can be reduced.

FIG. 30 shows a confirmation dialog image 720. That is, the voice output destination display/change UI section 122 may display the confirmation dialog image 720 on the display section 190 before the process of step S120 is performed, that is, before a connection with the audio device 200 is performed (a communication path of wireless communication is established). The confirmation dialog image 720 includes text information for inquiring whether or not there is a connection with the audio device 200, a "yes" button 720a, and a "no" button 720b. In the case where the user selects the "yes" button 720a, the wireless communication control section 133 performs the process of step S120, and in the case where the user selects the "no" button 720b, the wireless communication control section 133 ends the processes shown in FIG. 11. In this way, the possibility of performing a connection not intended by the user can be reduced.

It is possible for the user to arbitrary select whether or not the confirmation dialog image 710 or 720 is displayed on the mobile device 100. If the confirmation dialog image 710 or 720 is not displayed on the mobile device 100, the voice output destination will change smoothly. On the other hand, the possibility of performing a connection not intended by the user can be reduced by having the confirmation dialog image 710 or 720 displayed on the mobile device 100. In consideration of these advantages, the user may determine whether or not to display the confirmation dialog image 710 or 720 on the mobile device 100.

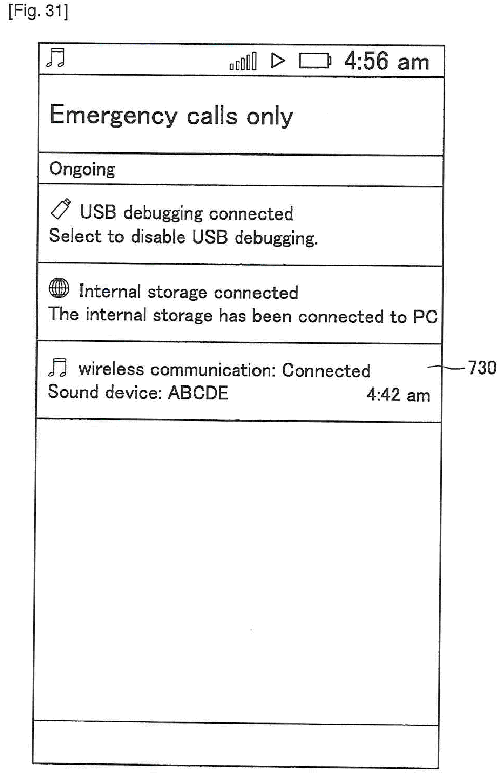

FIG. 31 shows a list image 730 which lists the devices presently connected to the mobile device 100. The display control section 135 may display the list image 730 on the display section 190 in accordance with a request from the user. A connection state with the audio device 200 (in this example, connecting), and the name or the like of the audio device 200 are described in the list image 730. In this way, the user can easily recognize the connection state with the audio device 200 (in this example, connecting), and the name or the like of the audio device 200.

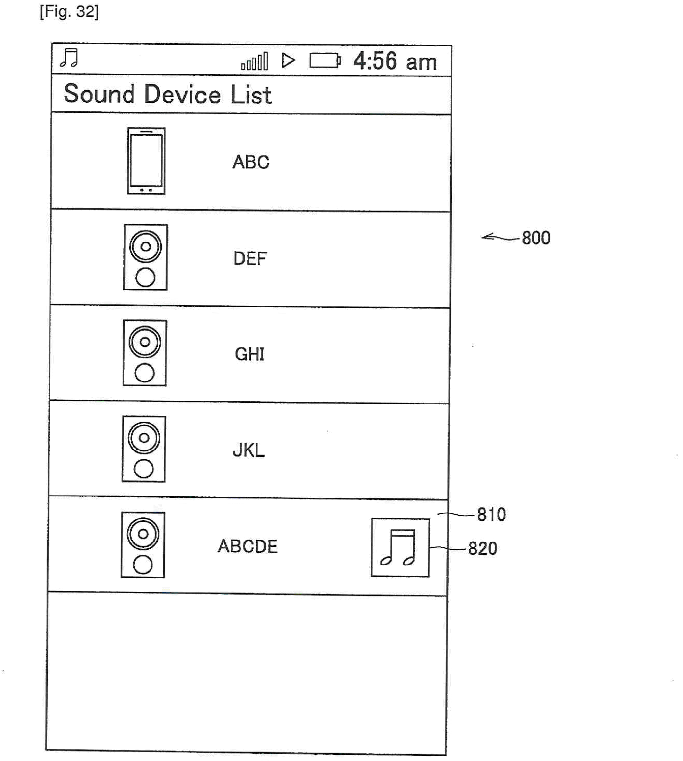

FIG. 32 shows a handover record 800 which is an example of the handover record. That is, the voice output destination display/change UI section 122 may display the handover record 800 on the display section 190 in accordance with a request from the user. The handover record 800 displays the icons and names of devices in association with each other. These devices have completed pairing with the mobile device 100. Note that "ABC" shows the mobile device 100 itself. That is, the mobile device 100 is also included the handover record 800. Further, an icon 820, which shows the present voice output destination, is displayed on the row 810 corresponding to the present voice output destination.

The user may select a device from the devices listed in the handover record 800, and the wireless communication control section 133 may establish a communication path of wireless communication with the selected device. In this way, the user can also change the voice output destination from the display screen.

Further, the icon of the mobile device 100 may change in accordance with the insertion/removal state of the earphones 400. That is, the icon of the mobile device 100 may become an icon attached with the earphones 400 in the case where the earphones 400 are inserted, and may become an icon without the earphones 400 in the case where the earphones 400 are pulled out (the example of FIG. 32). In this way, the user can easily understand the actual voice output destination (the speaker 150 or the earphones 400).

Further, the wireless communication control section 133 may scan the vicinity of the mobile device 100 by using the wireless communication section 160, and may display only the devices to which there was a response on the handover record 800. Further, the handover record 800 may display the devices to which there was a response, and may display greyed out the devices to which there was no response. In this way, the user can easily understand which devices can be selected as the voice output destination.

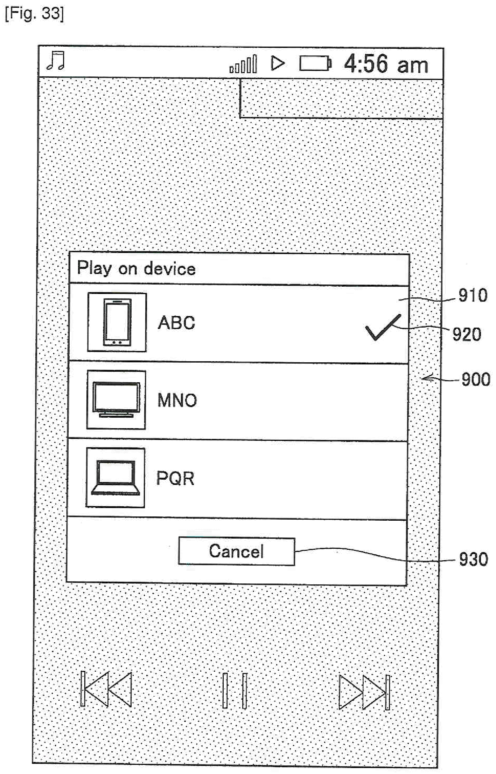

Note that the handover record may be managed by the music application control section 111. FIG. 33 shows a handover record 900 managed by the music application control section 111. That is, the music application control section 111 can display the handover record 900 on the display section 190 while executing a music application. In this way, since the user can call out the handover record 900 while not interrupting the music application, the usability is improved.

The configuration of the handover record 900 is similar to that of the handover record 800. That is, the handover record 900 displays the icons and names of the devices in association with each other. These devices have completed pairing with the mobile device 100. Note that "ABC" shows the mobile device 100 itself. That is, the mobile device 100 is also included the handover record 900. Further, an icon 920, which shows the present voice output destination, is displayed on the row 910 corresponding to the present voice output destination. Further, a cancel button 930 is included in the handover record 900. In the case where the user selects the cancel button 930, the music application control section 111 ends the display of the handover record 900. It is possible for the handover record 900 to change the icon in accordance with the with the insertion/removal state of the earphones 400, in a similar way to that of the handover record 800, or it is possible for the handover record 900 to change the display state of each row in accordance with a scan result.

### (4-2. Basic processes related to the experience 2)

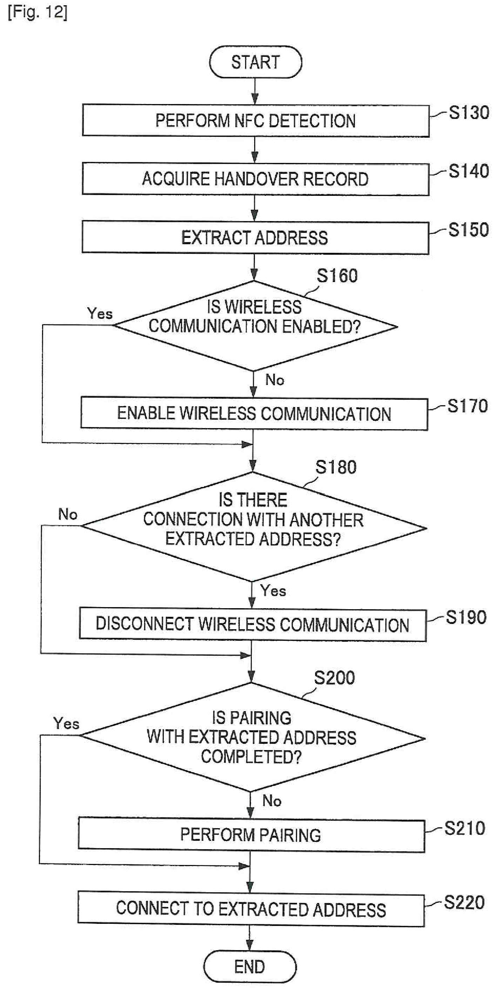

Next, the basic processes related to the experience 2 will be described in accordance with the flow chart shown in FIG. 12. As an assumption, the audio device 200 outputs the voice information, that is, the processes of the above described experience 1 are performed, as shown in FIG. 3. In order for the user to change the voice output destination from the audio device 200 to the audio device 300, the user brings the mobile device 100 close to the audio device 300. In response to this, the audio device 300 performs processes similar to those of the audio device 200 of the experience 1 (the processes shown in FIG. 10). On the other hand, the mobile device 100 performs the processes shown in FIG. 12.

In step S130, the NFC reader/writer 170 detects proximity of the NFC tag section 320, that is, proximity of the audio device 300, by acquiring NFC information from the audio device 300. Then, the NFC reader/writer 170 outputs the NFC information to the NFC control section 134, and the NFC control section 134 outputs the NFC information to the handover control section 121.

In step S140, the handover control section 121 acquires a handover record. In step S150, the handover control section 121 extracts address information from the NFC information, and outputs the address information and handover record to the wireless communication control section 133.

In step S160, the wireless communication control section 133 determines whether or not wireless communication is enabled. In the case where it is determined that wireless communication is enabled, the wireless communication control section 133 proceeds to step S180, and in the case where it is determined that wireless communication is not enabled, the wireless communication control section 133 proceeds to step S170.

In step S170, the wireless communication control section 133 performs a process to enable wireless communication (for example, a process which activates the wireless communication section 160 or the like) and notifies this fact to the handover application section 120. The voice output destination display/change UI section 122 generates an enabling notification image, which informs that the process to enable wireless communication is being performed, and outputs the enabling notification image to the display control section 135. The display control section 135 displays the enabling notification image on the display section 190. The enabling notification image may be configured similar to that of FIG. 23.

In step S180, the wireless communication control section 133 determines whether or not there is a connection (a communication path of wireless communication is established) with an audio device other than the audio device 300 (that is, an audio device shown by the extracted address information). In the case where it is determined that there is a connection with an audio device other than the audio device 300, the wireless communication control section 133 proceeds to step S190, and in the case where it is determined that there is no connection with an audio device other than the audio device 300, the wireless communication control section 133 proceeds to step S200.

In step S190, the wireless communication control section 133 disconnects the communication path with the audio device other than the audio device 300. In addition, the handover control section 121 requests to the voice output control section 132 to stop output of the voice information. In response to this, the voice output control section 132 stops output of the voice information provided from the music application control section 111. For example, the voice output control section 132 discards the voice information provided from the music application control section 111. However, the music application control section 111 continues output of the voice information. In this way, the output destination of the voice information returns temporarily to the mobile device 100.

In step S200, the wireless communication control section 133 determines whether or not pairing with the audio device 300 shown by the address information is completed, based on the handover record. In the case where it is determined that pairing with the audio device 300 is completed, the wireless communication control section 133 proceeds to step S220, and in the case where it is determined that pairing with the audio device 300 is not completed, the wireless communication control section 133 proceeds to step S210.

In step S210, the wireless communication control section 133 starts pairing (for example, exchanging of address information or the like) with the wireless communication section 310 of the audio device 300, and notifies that pairing has started to the handover application section 120. Further, the wireless communication control section 133 sequentially notifies the progress condition of pairing to the handover application section 120.

The voice output destination display/change UI section 122 generates a pairing notification image, which notifies that pairing (a pair setting) is being performed, and outputs the pairing notification image to the display control section 135. The display control section 135 displays the pairing notification image on the display section 190. The pairing notification image may have a configuration similar to that of FIG. 24. In the case where pairing is completed, the wireless communication control section 133 registers the address information in the handover record, and proceeds to step S220.

In step S220, the wireless communication control section 133 starts a connection process (a process which establishes a communication path of wireless communication) with the audio device 300 shown by the address information, that is, the wireless communication section 310. On the other hand, the wireless communication control section 133 notifies that a connection with the audio device 300 is being performed to the handover application section 120.

The voice output destination display/change UI section 122 generates a connection notification image, which notifies that a connection process with the audio device 300 is being performed, and outputs the connection notification image to the display control section 135. The display control section 135 displays the notification information image on the display section 190. The connection notification image may be configured similar to that of FIG. 25.

In the case where the connection with the audio device 300 is completed, the wireless communication control section 133 notifies this fact to the handover application section 120. The voice output destination display/change UI section 122 generates a connection completion notification image, which informs that the connection with the audio device 300 is completed, and outputs the connection completion notification image to the display control section 135. The display control section 135 displays the connection completion notification image on the display section 190. The connection completion notification image may be configured similar to that of FIG. 26.

On the other hand, the handover control section 121 outputs, to the voice output control section 132, restart request information for requesting to restart output of the voice information. In response to this, the voice output control section 132 outputs the voice information to the wireless communication control section 133, the wireless communication control section 133 outputs the voice information to the wireless communication section 160, and the wireless communication section 160 transmits the voice information to the wireless communication section 310. The wireless communication section 310 outputs the voice information to the voice output control section 380 via the wireless communication control section 340 and the control section 370. The voice output control section 380 outputs the voice information from the speaker 390. In this way, the handover control section 121 changes the voice output destination from the voice output control section 280 in the audio device 200 to the voice output control section 380 in the audio device 300.

Further, while the music application control section 111 outputs the voice information continuously to the voice output control section 132 during the connection process between the mobile device 100 and audio device 300, the voice output control section 132 discards this voice information. Therefore, output of the voice information from the audio device 200 is interrupted. Then, in the case where a connection between the mobile device 100 and the audio device 300 is established, the voice information is output from the audio device 300. Therefore, the audio device 300 outputs the voice information advanced only by the period to which output of the voice information has been interrupted, that is, the interruption period. By the above processes, the experience 2 is implemented.

### (4-3. Basic processes related to the experience 3)

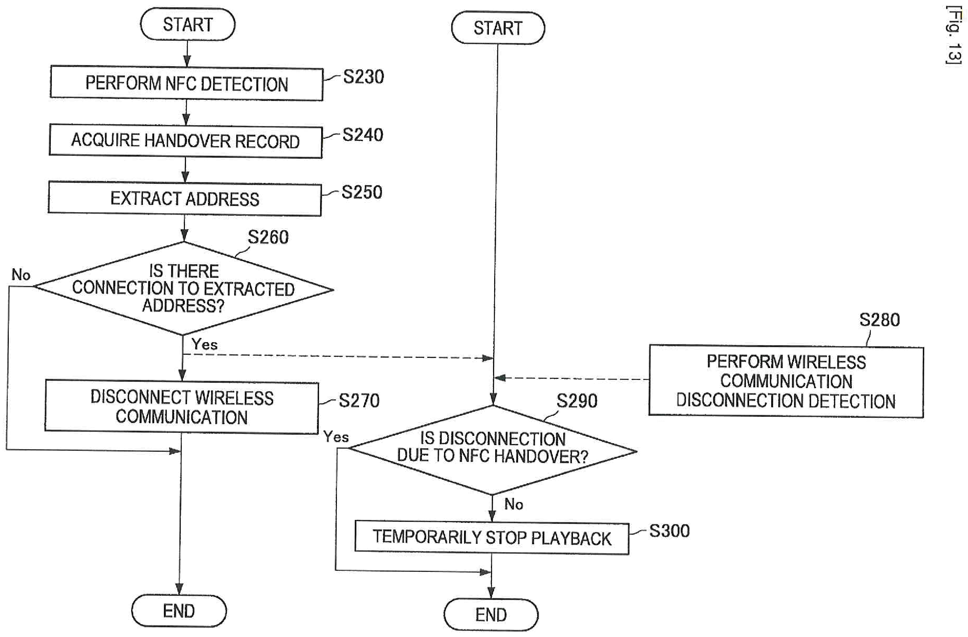

Next, the basic processes related to the experience 3 will be described in accordance with the flow chart shown in FIG. 13. As an assumption, the audio device 200 outputs the voice information, that is, the processes of the above described experience 1 are performed, as shown in FIG. 5. In order for the user to return the voice output destination from the audio device 200 to the mobile device 100, the user brings the mobile device 100 close to the audio device 200. In response to this, the audio device 200 performs processes similar to those of the experience 1 (the processes shown in FIG. 10). On the other hand, the mobile device 100 performs the processes shown in FIG. 13.

In step S230, the NFC reader/writer 170 detects proximity of the NFC tag section 220, that is, proximity of the audio device 200, by acquiring NFC information from the audio device 200. Then, the NFC reader/writer 170 outputs the NFC information to the NFC control section 134, and the NFC control section 134 outputs the NFC information to the handover control section 121.

In step S240, the handover control section 121 acquires a handover record. In step S250, the handover control section 121 extracts address information from the NFC information, and outputs the address information and handover record to the wireless communication control section 133.

In step S260, the wireless communication control section 133 determines whether or not there is a connection (a communication path of wireless communication is established) with an audio device other than the audio device 200 (that is, an audio device shown by the extracted address information). In the case where it is determined that there is a connection with an audio device other than the audio device 200, the wireless communication control section 133 notifies to the handover control section 121 and the music application control section 111 that disconnection is performed by NFC handover, and proceeds to step S270. On the other hand, in the case where it is determined that there is no connection with an audio device other than the audio device 200, the wireless communication control section 133 ends the present process.

In step S270, the wireless communication control section 133 disconnects the communication path with the audio device other than the audio device 200. In addition, the handover control section 121 requests to the voice output control section 132 to stop output of the voice information. In response to this, the voice output control section 132 stops output of the voice information provided from the music application control section 111. For example, the voice output control section 132 discards the voice information provided from the music application control section 111. However, the music application control section 111 continues output of the voice information. After the disconnection of the communication path is completed, the handover control section 121 requests to change the voice output destination from the wireless communication control section 133 to the output destination in the mobile device 100 (the earphones 400 or the speaker 150). In response to this, the voice output control section 132 changes the output destination of the voice information to the earphones 400 or the speaker 150. Then, the voice output control section 132 outputs the voice information to the earphones 400 or the speaker 150.

In step S280, the wireless communication control section 133 notifies to the music application section 110 that the communication path is disconnected. Note that the wireless communication control section 133 notifies this fact to the music application section 110 even in the case where wireless communication is disconnected due another cause, regardless of a disconnection by NFC handover. For example, a distance between the mobile device 100 and the audio device 200 exceeding a range capable for wireless communication can be included as another cause.

In step S290, the music application control section 111 determines whether or not the disconnection of the communication path is due to NFC handover. In the case where it is determined that the disconnection of the communication path is due to NFC handover, the music application control section 111 changes the voice information continuously to the voice output control section 132. The voice output control section 132 outputs the voice information to the earphones 400 or the speaker 150. Afterwards, the music application control section 111 ends the present process.

That is, in this case, the mobile device 100 changes the output destination of the voice information from the voice output control section 280 in the audio device 200 to the voice output control section 132 in the mobile device 100. Further, while the music application control section 111 outputs the voice information continuously to the voice output control section 132 during the disconnection process between the mobile device 100 and audio device 200, the voice output control section 132 discards this voice information. Therefore, output of voice information from the audio device 200 is interrupted. Then, in the case where the communication path between the mobile device 100 and the audio device 200 is disconnected, the voice information is output from the mobile device 100. Therefore, the mobile device 100 outputs the voice information advanced only by the period to which output of the voice information has been interrupted, that is, the interruption period.

On the other hand, in the case where it is determined that the disconnection of the communication path is not due to NFC handover, the music application control section 111 proceeds to step S300. In step S300, the music application control section 111 temporarily stops the voice output. In this case, it is because wireless communication is disconnected due to a cause other than NFC handover. Afterwards, the music application control section 111 ends the present process. By the above processes, the experience 3 is implemented.

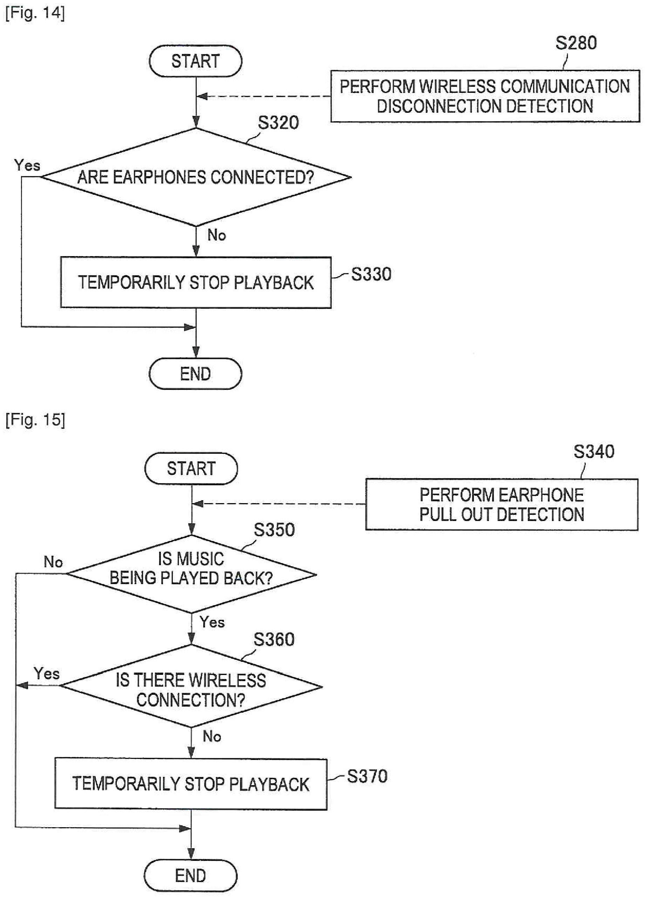

In this way, in the experience 3, while the voice output destination returns from the audio device 200 to the mobile device 100, in the case where the earphones 400 are not plugged into the mobile device 100, there is the possibility that the user does not desire voice output from the speaker 150. Accordingly, the mobile device 100 may perform the processes shown in FIG. 14 in the experience 3. As shown in FIG. 14, these processes are different to the processes from step S290 onwards.

That is, in step S320, the earphone insertion/removal state monitoring section 131 outputs monitoring result information to the music application control section 111. The music application control section 111 determines whether or not the earphones 400 are connected to the mobile device 100, based on the monitoring result information. In the case where it is determined that the earphones 400 are connected to the mobile device 100, the music application control section 111 outputs output of the voice information continuously to the voice output control section 132. The voice output control section 132 outputs the voice information to the earphones 400. Afterwards, the music application control section 111 ends the present process.

On the other hand, in the case where it is determined that the earphones 400 are pulled out from the mobile device 100, the music application control section 111 proceeds to step S330. In step S330, the music application control section 111 temporarily stops the voice output. Afterwards, the music application control section 111 ends the present process. In the case where the earphones 400 are connected to the mobile device 100, the music application control section 111 restarts the voice output. The voice information is output to the voice output control section 132. According to the processes of FIG. 14, in the case where the mobile device 100, which has the earphones 400 pulled out, is brought close to the audio device of the voice output destination, the mobile device 100 can temporarily stop the voice output from the mobile device 100 while returning the voice output destination to the mobile device 100. Further, in the case where the communication path between the mobile device 100 and the audio device of the voice output destination is disconnected due to some cause, the mobile device 100 can output the voice information from the earphones 400. The processes of FIG. 13 and the processes of FIG. 14 may be used together.

### (4-4. Processes at the time when earphones are taken off in the experience 1)

In the experience 1 as described above, since the voice output destination is changed from the mobile device 100 to the audio device 200, there is the possibility that the user will pull out the earphones 400 from the mobile device 100 after the change of the voice output destination. In such a case, it is also preferable that output of the voice information is continued from the audio device 200. Accordingly, the mobile device 100 may perform the processes shown in FIG. 15.

In step S340, the user pulls out the earphones 400 from the mobile device 100. In response to this, the earphone insertion/removal state monitoring section 131 outputs monitoring result information indicating that the earphones 400 are pulled out from the mobile device 100 to the music application control section 111.

In step S350, the music application control section 111 determines whether or not there is output of the voice information (during music playback). In the case where it is determined that there is output of the voice information, the music application control section 111 proceeds to step S360, and in the case where it is determined that there is no output of voice information, the music application control section 111 ends the present process.

In step S360, the music application control section 111 determines whether or not there is a wireless connection with one of the audio devices (a communication path is established). In the case where it is determined that there is a wireless connection with one of the audio devices, the music application control section 111 ends the present process, and in the case where it is determined that there is no connection with one of the audio devices, the music application control section 111 proceeds to step S370.

In step S370, the music application control section 111 temporarily stops output of the voice information. In this case, the voice output destination becomes the mobile device 100 because the earphones 400 are pulled out from the mobile device 100. Afterwards, the music application control section 111 ends the present process. In the case where the earphones 400 are connected to the mobile device 100, the music application control section 111 restarts output of the voice information. During execution of the experience 1, since it proceeds in the "yes" direction in step S360, the output of the voice information is continued.

### (4-5. Processes of fade- in and fade-out in the experience 1)

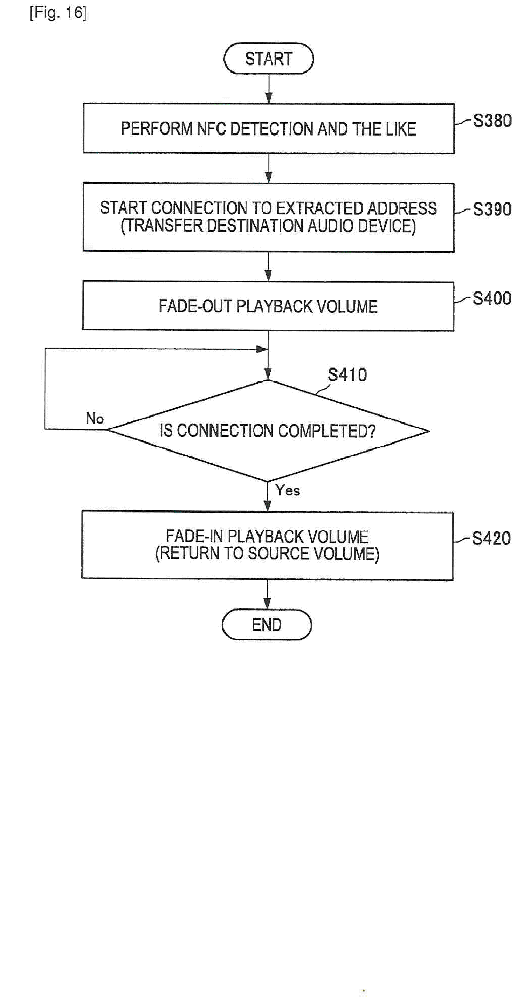

As described above, in the experiences 1 to 3, output of the voice information from each device is stopped before a communication path is established (or disconnected), and the voice output from each device is restarted after a communication path is established (or disconnected). Here, it is preferable to fade-out the voice information at the time of stopping the voice information, and it is preferable to fade-in the voice information at the time of restarting the voice information. This is because the user can listen to the voice information with a reduced feeling of discomfort in the case of fading in or fading out the voice information. Accordingly, the mobile device 100 may perform the processes shown in FIG. 16 in the experience 1.

In step S380, the mobile device 100 performs the processes of steps S50 to S110 shown in FIG. 11. In step S390, the wireless communication control section 133 starts a connection process with the audio device 200 shown by the address information extracted in step S70.

In step S400, the wireless communication control section 133 notifies to the handover application section 120 that a connection with the audio device 200 is performed. The handover control section 121 requests to the voice output control section 132 to stop output of the voice information. In response to this, the voice output control section 132 fades out output of the voice information provided from the music application control section 111. Specifically, the voice output control section 132 outputs the voice information with the volume set in the voice output control section 132 to the earphones 400 (or the speaker 150), and decreases the volume set in the voice output control section 132 in accordance with the passage of time. In this way, the voice information output from the earphones 400 (or the speaker 150) also fades out. However, the music application control section 111 continues output of the voice information.

Here, the time of the fade-out (the time from when the fade-out starts until the set volume of the voice output control section 132 becomes 0) is set in advance. Further, the voice output control section 132 sets the inclination of the fade-out (the amount the volume decreases per unit time), based on the volume set in the voice output control section 132 at the time of starting the fade-out, and the time of the fade-out.

In step S410, the wireless communication control section 133 stands by until the connection with the audio device 200 is completed. In the case where it is determined that the connection with the audio device 200 is completed, the wireless communication control section 133 proceeds to step S420.

In step S420, the wireless communication control section 133 notifies to the handover application section 120 that the connection with the audio device 200 is completed. The handover control section 121 outputs, to the voice output control section 132, change request information for requesting to change the voice output destination from the present output destination (the earphones 400) to the wireless communication control section 133. In response to this, the voice output control section 132 changes the output destination of the voice information from the present output destination to the wireless communication control section 133.

The wireless communication control section 133 outputs the voice information to the wireless communication section 160 with the volume set in the voice output control section 132, and the voice output control section 132 raises this volume set in the voice output control section 132 in accordance with the passage of time. In this way, the wireless communication control section 133 fades in the voice information. The time of the fade-in is the same as the time of the fade-out, and the inclination of the fade-in (the amount the volume increases per unit time) is set to change the sign of the inclination of the fade-out. Needless to say, the time and inclination of the fade-in and the fade-out is not limited to these examples. For example, the time of the fade-in and the fade-out may be mutually different. The absolute value of these inclinations may also be different. Further, the timing of the fade-in and the fade-out may be arbitrary changed. For example, in the process of the establishment (or the disconnection) of a communication path, the fade-in and the fade-out may start in a time span where a fluctuation of the processing time is small, without performing fade-in and fade-out with some time span where there is a fluctuation in the processing time for each audio device. Afterwards, the mobile device 100 ends the present process.

### (4-6. Processes of fade-in and fade-out in the experience 2)

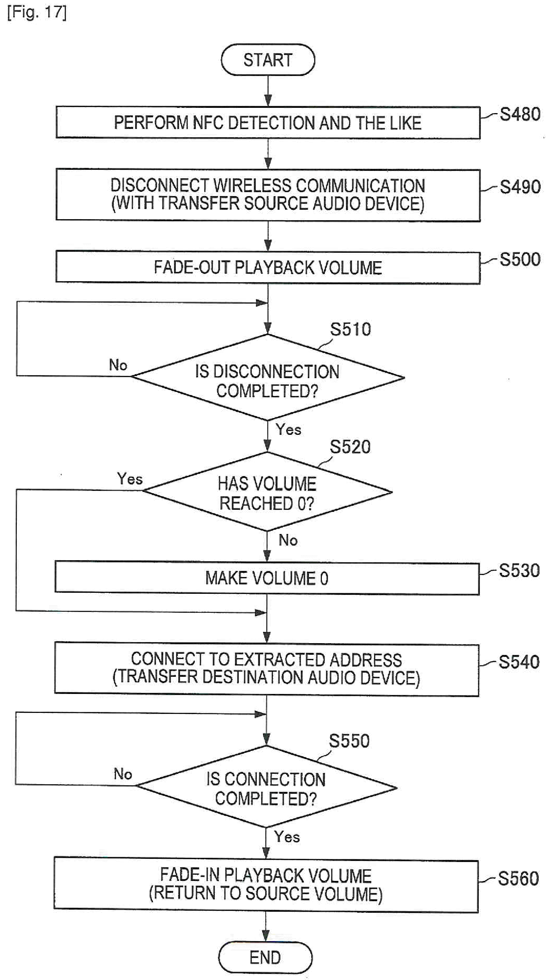

Similarly, the mobile device 100 may perform the processes shown in FIG. 17 in the experience 2. In step S480, the mobile device 100 performs the processes of steps S130 to S180 shown in FIG. 12.

In step S490, the wireless communication control section 133 starts a process which disconnects the communication path with the audio device other than the audio device 300, that is, the audio device 200 (transfer source audio device).

In step S500, the wireless communication control system 133 outputs the voice information to the wireless communication section 160 with the volume set in the voice output control section 132, and the voice output control section 132 decreases this volume set in the voice output control section 132 in accordance with the passage of time. In this way, the wireless communication control section 133 fades out the voice information. In this way, the voice information output from the audio device 200 also fades out. Here, the time and inclination of the fade-out may be similar to that of the above described examples. Note that the music application control section 111 continues output of the voice information.

In step S510, the wireless communication control section 133 stands by until the communication path with the audio device 200 is disconnected. Afterwards, the wireless communication control section 133 proceeds to step S520.

In step S520, the wireless communication control section 133 determines whether or not the fade-out is completed (that is, the volume set in the voice output control section 132 becomes 0). In the case where it is determined that the fade-out is completed, the wireless communication control section 133 proceeds to step S540, and in the case where it is determined that the fade-out is not completed, the wireless communication control section 133 proceeds to step S530.

In step S530, the voice output control section 132 makes this volume set in the voice output control section 132 to be 0.

In step S540, the wireless communication control section 133 starts a connection process with the audio device 300 shown by the address information, that is, the transfer destination audio device. On the other hand, the wireless communication control section 133 notifies to the handover application section 120 that a connection with the audio device 300 is performed.

In step S550, the wireless communication control section 133 stands by until the connection with the audio device 300 is completed, and afterwards proceeds to step S560.

In step S560, the wireless communication control section 133 notifies to the handover application section 120 that the connection with the audio device 300 is completed. On the other hand, the handover control section 121 outputs restart request information for requesting to restart output of the voice information to the wireless communication control section 133.

In response to this, the wireless communication control section 133 outputs the voice information to the wireless communication section 160 with the volume set in the voice output control section 132, and the voice output control section 132 raises this volume set in the voice output control section 132 in accordance with the passage of time. In this way, the wireless communication control section 133 fades in the voice information. The time and inclination of the fade-in may be similar to that of the above described examples. Afterwards, the mobile device 100 ends the present process.

### (4-7. Processes of fade-in and fade-out in the experience 3)

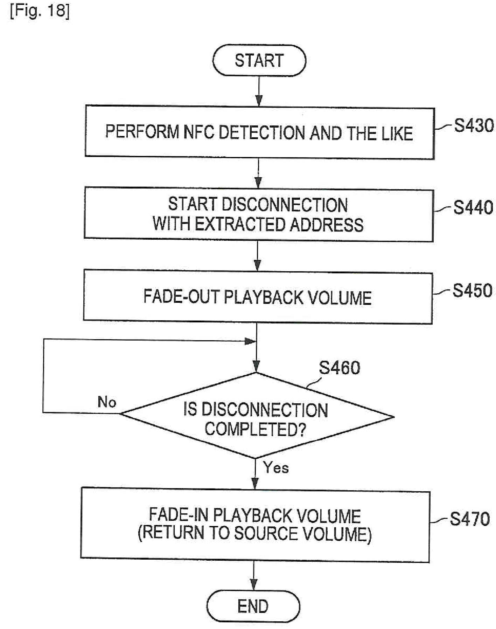

Similarly, the mobile device 100 may perform the processes shown in FIG. 18 in the experience 3. In step S430, the mobile device 100 performs the processes of steps S230 to S260 shown in FIG. 13.

In step S440, the wireless communication control section 133 starts a process which disconnects the communication path with the audio device shown by the address information extracted in step S250, that is, the audio device 200. In addition, the handover control section 121 requests to the wireless communication control section 133 to stop output of the voice information.

In step S450, the wireless communication control system 133 outputs the voice information to the wireless communication section 160 with the volume set in the voice output control section 132, and the voice output control section 132 decreases this volume set in the voice output control section 132 in accordance with the passage of time. In this way, the wireless communication control section 133 fades out the voice information. In this way, the voice information output from the audio device 200 also fades out. Here, the time and inclination of the fade-out may be similar to that of the above described examples. Further, the music application control section 111 continues output of the voice information.

In step S460, the wireless communication control section 133 stands by until the disconnection of the communication path is completed, and afterwards proceeds to step S470.

In step S470, the handover control section 121 requests to change the voice output destination from the wireless communication control section 133 to the output destination in the mobile device 100 (the earphones 400 or the speaker 150). In response to this, the voice output control section 132 changes the output destination of the voice information to the earphones 400 or the speaker 150. On the other hand, the wireless communication control section 133 notifies to the music application section 110 that the communication path is disconnected. The music application control section 111 determines whether or not the disconnection of the communication path is due to NFC handover. In the case where it is determined that the disconnection of the communication path is due to NFC handover, the music application control section 111 continues output of the voice information.

The voice output control section 132 fades in output of the voice information provided from the music application control section 111. Specifically, the voice output control section 132 outputs the voice information with the volume set in the voice output control section 132 to the earphones 400 (or the speaker 150), and raises the volume set in the voice output control section 132 in accordance with the passage of time. In this way, the voice information output from the earphones 400 (or the speaker 150) also fades in. Afterwards, the music application control section 111 ends the present process. Note that in the case where it is determined that the disconnection of the communication path is not due to NFC handover, the music application control section 111 performs a process similar to that of step S300 shown in FIG. 13. Afterwards, the music application control section 111 ends the present process.

### (4-8. Volume setting processes at the time of communication path establishment (at the time of connection))

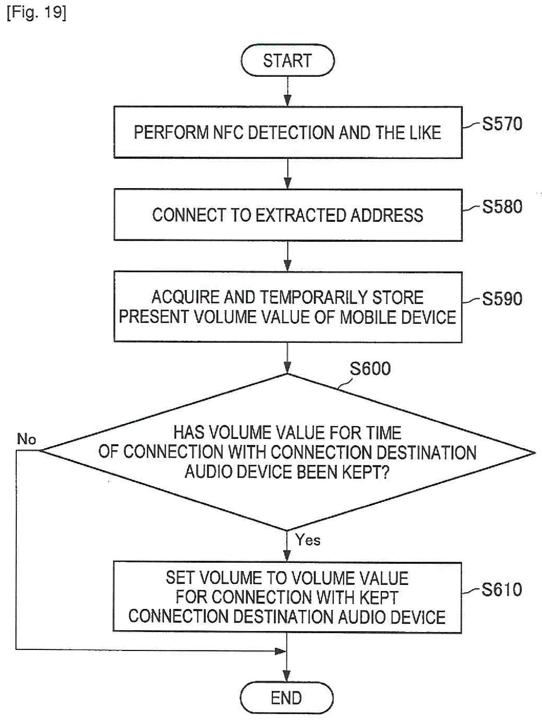

In the experiences 1 and 2 as described above, the user can change the voice output destination to the audio device 200 or the audio device 300 by using the mobile device 100. Here, if the volume of the mobile device 100 (the volume of the voice output control section 132) is set in advance for each of the audio devices 200 and 300, the trouble for the user to adjust the volume for each change can be saved. Further, when the voice output destination is changed to the audio device 200 or 300, the possibility that the voice information will be output from these audio devices with a volume not intended by the user will be reduced. Accordingly, the mobile device 100 may perform the processes shown in FIG. 19 when performing the processes of the experiences 1 or 2.

In steps S570 to S580, the mobile device 100 performs the processes of steps S50 to S120 shown in FIG. 11. In step S590, the voice output control section 132 temporarily stores the volume set in the voice output control section 132.

In step S600, the voice output control section 132 determines whether or not the volume for the connection with the connection destination (transfer destination) is stored (kept). In the case where it is determined that the volume for the connection with the transfer destination is stored, the voice output control section 132 proceeds to step S610. In the case where it is determined that the volume for the connection with the transfer destination is not stored, the voice output control section 132 ends the present process. In this case, the wireless communication control section 133 outputs the voice information with the present set volume of the voice output control section 132.

In step S610, the voice output control section 132 changes the volume set in the voice output control section 132 to the volume for the connection with the transfer destination audio device. Afterwards, the voice output control section 132 ends the present process. In this case, the wireless communication control section 133 outputs the voice information with the volume for the connection with the transfer destination audio device.

### (4-9. Volume setting processes at the time of communication path disconnection)

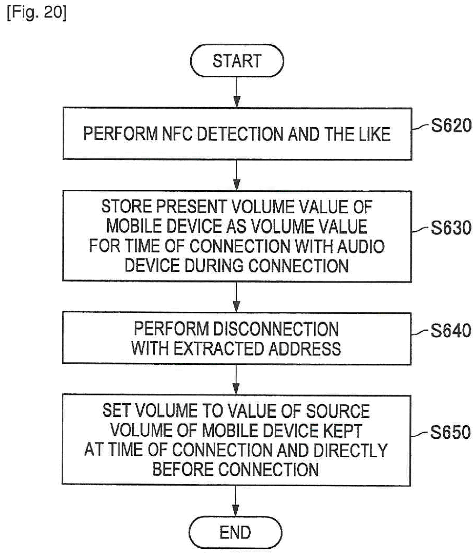

In the experience 3 as described above, the user can return the voice output destination from the audio device 200 or the audio device 300 to the mobile device 100 by using the mobile device 100. Here, when the voice output destination is returned to the mobile device 100, if the volume of the mobile device 100 is returned automatically to an initial value (a value before the voice output destination is transferred to the audio device 200 or the like), the trouble for the user to adjust the volume for each change can be saved. Accordingly, when performing the processes of the experience 3, the mobile device 100 may perform the processes shown in FIG. 20.

In step S620, the mobile device 100 performs the processes of steps S230 to S260 shown in FIG. 13. In step S630, the voice output control section 132 stores the volume set in the voice output control section 132 as a volume for the connection with the transfer destination audio device.

In step S640, the mobile device 100 performs a process similar to that of step S270. In step S650, the voice output control section 132 returns a volume set value to the value stored in step S590 shown in FIG. 19. Afterwards, the voice output control section 132 ends the present process.

Note that the present volume set value of the audio device 200 is stored in the NFC tag section 220, and the NFC tag section 220 may also transmit this volume set value to the mobile device 100 as NFC information. This is similar for the audio device 300. Also, the voice output control section 132 may set the volume of the voice output control section 132, based on the volume set value of the audio devices 200 and 300. For example, a target value of the volume for each of the audio devices 200 and 300 is set, and the voice output control section 132 may set the volume of the voice output control section 132 so that a value, in which the volume of the voice output control section 132 is multiplied by the volume of the audio devices 200 and 300, matches the target value.

### (4-10. Modified example related to power supply on processes of the audio device)

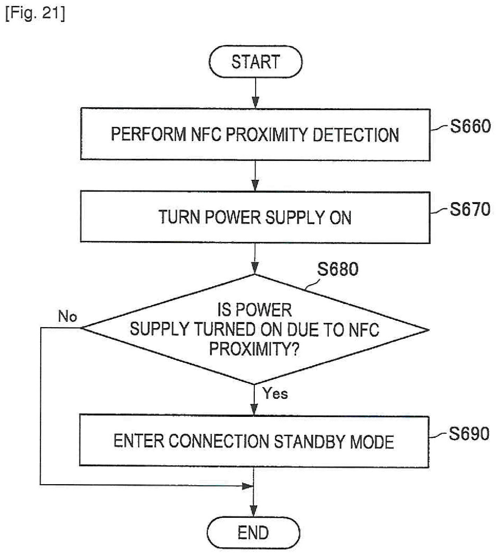

Next, a modified example related to power source on processes of the audio devices 200 and 300 will be described according to the flow chart shown in FIG. 21. Note that in the following example, while the processes performed by the audio device 200 are described, it is possible for the processes to be similarly performed by the audio device 300.

In steps S660 to S670, the audio device 200 performs the processes of steps S10 to S30 shown in FIG. 10. In step S680, the wireless communication control section 240 determines whether or not the power supply is turned on (that is, the processes of steps S660 to S670 are performed) by NFC proximity (NFC handover). In the case where it is determined that the power supply is turned on by NFC proximity (NFC handover), the wireless communication control section 240 proceeds to step S690, and in the cases other than this, the wireless communication control section 240 ends the present process. In step S690, the wireless communication control section 240 performs a process similar to that of step S40 shown in FIG. 10. In this way, the wireless communication control section 240 can efficiently enter a connection standby mode.

In the present embodiment described above, in the case where proximity of the NFC tag section 220 or 320 is detected, the mobile device 100 changes the voice output destination from the present output destination to one of the voice output control sections 132, 280 and 380. In this way, the user can more easily change the output destination of the voice information.

For example, in the experience 1, the present output destination is the voice output control section 132, and the voice output control section of the transfer destination is the voice output control section 280. In the experience 2, the present output destination is the voice output control section 280, and the voice output control section of the transfer destination is the voice output control section 380. In the experience 3, the present output destination is the voice output control section 280, and the voice output control section of the transfer destination is the voice output control section 132.

In addition, since the mobile device 100 controls output of the voice information, based on a state of one of the present output destination and the output destination after transfer, the mobile device 100 can control the voice information more precisely.

In addition, in the case where the voice output destination returns to the mobile device 100, the mobile device 100 determines whether or not the earphones 400 are connected to the mobile device 100, and controls output of the voice information, based on a determination result. Therefore, the mobile device 100 can control the output of the voice information more precisely.

Specifically, in the case where the earphones 400 are not connected to the mobile device 100, the mobile device 100 stops output of the voice information. In this way, output not intended by the user is prevented.

In addition, since the mobile device 100 adjusts the volume of the voice information, based on a state of at least one of the volume output control section of the present output destination or the volume output control section of the transfer destination, the mobile device 100 can adjust the volume more precisely.

Specifically, since the mobile device 100 adjusts the volume of the voice information, based on a volume of at least one of the volume set in the voice output control section of the present output destination or the volume set in voice output control section of the transfer destination, the mobile device 100 can adjust the volume more precisely.

In addition, since the mobile device 100 adjusts the output of the voice information, based on a communication state of at least one of the output control section of the present output destination or the output control section of the transfer direction, the mobile device 100 can control output of the voice information more precisely.

Specifically, since the mobile device 100 disconnects the output of the voice information, in the case where a communication path with the present output destination is disconnected by proximity to the NFC tag sections 220 or 320, the user can continue to enjoy the voice information.

In addition, in the case where the present output destination becomes the mobile device 100, the mobile device 100 determines whether or not the earphones 400 are connected to the mobile device 100. Then, in the case where it is determined that the earphones 400 are not connected to the mobile device 100, and a communication path with the output control section of the transfer destination is established, the mobile device 100 continues output of the voice information. Therefore, the user can continue to enjoy the voice information.

In addition, when a fade-out of the voice information starts before a communication path with the present output destination is disconnected, and a communication path with the output control section of the transfer destination is established, the mobile device 100 starts fading in the voice information. Therefore, the user can enjoy the voice information with a reduced feeling of discomfort.

It should be understood by those skilled in the art that various modifications, combinations, sub-combinations and alterations may occur depending on design requirements and other factors insofar as they are within the scope of the appended claims or the equivalents thereof.

For example, while the content information is voice information in the above described embodiments, the present disclosure is not limited to such an example. For example, the content information may be image information or the like. In this case, each device has a device for image display. Further, the target of insertion/removal state monitoring may be media, for example, headphones, other than the earphones 400. Further, the operating subject of each operation is not limited to the above described examples. For example, the processes performed by the wireless communication control section 133 may be implemented in the handover control section 121.

Further, in the case where some communication path is established in the above described processes, other communication paths are disconnected. That is, there is one established communication path. However, a plurality of communication paths may be simultaneously established. That is, in the case where another communication path is established while establishing a first communication path, the mobile device 100 may maintain the first communication path. In this case, voice information may be simultaneously output, for example, from the plurality of devices.

Further, a plurality of users may mutually intercept the audio device 200 or the audio device 300. For example, when a communication path between a mobile device 100 of some user and the audio device 200 is established, another user brings his or her mobile device 100 close to the audio device 200. In this case, the mobile device 100 of the other user establishes a communication path with the audio device 200, and may disconnect the communication path with the mobile device 100 of some user. In this way, for example, the other user can freely enjoy the experience 1 even in the case where some user has established a communication path between his or her mobile device 100 and the audio device 200 while the other user has gone out.

Further, while the mobile device 100 displays various notification images in the above described processes, a display section may be included in the audio devices 200 and 300, and images similar to the various notification images may be displayed on these display sections. Further, an impressive rendition at the time of connection, for example, may be performed in each of the mobile device 100, the audio device 200, and the audio device 300. For example, an image which changes in accordance with the distance between the audio devices 200 and 300 may be displayed on the display section 190 of the mobile device 100. Further, a light emitting section (a lamp or the like) may be included in the audio devices 200 and 300, and processes may be performed, such as an issuing section illuminating if the mobile device 100 is brought close, and illuminating the issuing section with an amount of emitted light in accordance with the distance from the mobile device 100. Further, in the case where the audio devices 200 and 300 have a display section, an image which shows the state of the NFC information carrying to the mobile device 100 may be displayed on the display sections at the time of transmitting the NFC information.

Further, the NFC tag sections 220 and 320 may not be built into the audio devices 200 and 300. Further, the audio devices 200 and 300 may include a display section which displays an address for wireless communication of the audio device 200, instead of the NFC tag sections 220 and 320, in some mode (for example, a QR code (registered trademark) or the like). In this case, the mobile device 100 has the capability to read the address displayed on the display sections (for example, an imaging section).

Additionally, the present technology may also be configured as below.
(1) A control system comprising a processor configured to control switching an output destination of content reproduced by a mobile device when the mobile device is within proximity, or passes within proximity, of a second device.
(2) The control system as recited in (1), wherein the content is stored in the mobile device.
(3) The control system as recited in (1), wherein the control system is included in the mobile device.
(4) The control system as recited in (1), wherein the output destination is switched from the mobile device to the second device.
(5) The control system as recited in (1), wherein the output destination is switched from the second device to the mobile device.
(6) The control system as recited in (5), wherein a manner of output of the content is determined according to the state of the mobile device.
(7) The control system as recited in (1), wherein the output destination is switched from a third device to the second device.
(8) The control system as recited in (1), wherein when the mobile device is within proximity, or passes within proximity, of the second device, the control system receives from the second device address information for wireless communication with the second device.
(9) The control system as recited in (8), wherein the address information is received via near field communication (NFC).
(10) The control system as recited in (9), wherein the control system further comprises an NFC reader/writer for receiving the address information.
(11) The control system as recited in (1), wherein when the mobile device is within proximity, or passes within proximity, of the second device, a power supply of the second device is turned on.
(12) The control system as recited in (1), wherein switching comprises providing an enabling notification image via the mobile device.
(13) The control system as recited in (1), wherein switching comprises pairing wireless address information of the control system and the second device.
(14) The control system as recited in (13), wherein switching further comprises providing a pairing notification image via the mobile device.
(15) The control system as recited in (1), wherein switching comprises establishing a wireless communication path between the control system and the second device.
(16) The control system as recited in (15), wherein switching further comprises providing a connection notification image via the mobile device.
(17) The control system as recited in (1), wherein switching is performed after a user of the mobile device responds to display of a confirmation dialog image on the mobile device.
(18) The control system as recited in (1), wherein the mobile device is operable to display an indication of a present output destination.
(19) A content presentation method comprising switching an output destination of content reproduced by a mobile device when the mobile device is within proximity, or passes within proximity, of a second device.
(20) A non-transitory computer-readable medium storing a computer-readable program for implementing a content presentation method, the method comprising switching an output destination of content reproduced by a mobile device when the mobile device is within proximity, or passes within proximity, of a second device.
(21) The control system as recited in (1), wherein switching comprises enabling wireless communication between the control system and the second device.
(22) The control system as recited in (1), wherein the control system is included in the mobile device, wherein the mobile device is a smartphone that is operable to connect to a server, that is operable to connect to earphones or headphones, and that further comprises a speaker, a wireless communication section, a near field communication (NFC) reader/writer, a vibration system and a display section, wherein when the smartphone is within proximity, or passes within proximity, of the second device, the smartphone receives from the second device address information for wireless communication with the second device, wherein the address information is received via NFC, and wherein switching comprises establishing a wireless communication path between the smartphone and the second device.
(23) An information processing apparatus, including:
   a proximity determination section which detects proximity to a transmission section transmitting identification information for identifying a first output control section; and
   a control section which changes an output destination of content information from a present output destination to the first output control section or a second output control section, in a case where proximity to the transmission section is detected.
(24) The information processing apparatus according to (23),
   wherein the transmission section is enabled to transmit the identification information when the proximity determination section is brought close.
(25) The information processing apparatus according to (23),
   wherein the control section changes the output destination of the content information from the first output control section which is a present output destination to the second output control section, and controls output of the content information based on a state of at least one of the first output control section and the second output control section.
(26) The information processing apparatus according to (25),
   wherein the control section determines whether or not a predetermined information output medium is connected to the second output control section, and controls output of the content information based on a determination result.
(27) The information processing apparatus according to (26),
   wherein, in a case where it is determined that the predetermined information output medium is not connected to the second output control section, the control section stops output of the content information to the second output control section.
(28) The information processing apparatus according to any one of (25) to (27),
   wherein the content information is voice information, and
   wherein the control section adjusts a volume of the content information based on the state of at least one of the first output control section and the second output control section.
(29) The information processing apparatus according to (28),
   wherein the control section adjusts the volume of the content information based on a volume of at least one of a volume set in the first output control section and a volume set in the second output control section.
(30) The information processing apparatus according to any one of (25) to (29), further including:
   a communication section which disconnects a communication path with the first output control section, and establishes a communication path with the second output control section, in a case where proximity to the transmission section is detected,
   wherein the control section controls output of the content information based on a communication state of at least one of the first output control section and the second output control section.
(31) The information processing apparatus according to (30),
   wherein, in a case where the communication path with the first output control section is disconnected due to proximity to the transmission section, the control section continues output of the content information.
(32) The information processing apparatus according to (30) or (31),
   wherein the control section determines whether or not a predetermined information output medium is connected to the first output control section, and in a case where it is determined that the predetermined information output medium is not connected to the first output control section, and a communication path is established with the second control section, the control section continues output of the content information.
(33) The information processing apparatus according to any one of (30) to (32), wherein the control section starts a fade-out of the content information before the communication path with the first output control section is disconnected, and starts a fade-in of the content information when the communication path with the second output control section is established.
(34) An information processing method, including:
   detecting proximity to a transmission section having identification information for identifying a first output control section; and
   changing an output destination of content information to the first output control section
   or a second output control section, in a case where proximity to the transmission section is detected.
(35) A program for causing a computer to implement:
   a proximity determination function which detects proximity to a transmission section having identification information for identifying a first output control section; and
   a control function which changes an output destination of content information to the first output control section or a second output control section, in a case where proximity to the transmission section is detected.

### Reference Signs List

100 Mobile device
110a Control section
110 Music application section
111 Music application control section
120 Handover application section
121 Handover control section
122 Voice output destination display/change UI section
131 Earphone insertion/removal state monitoring section
132 Music application control section
133 Wireless communication control section
134 NFC control section
135 Display control section
150 Speaker
160 Wireless communication section
170 NFC reader/writer
180 Vibration apparatus
190 Display section
200 Audio device
220 NFC tag section
280 Voice output control section
300 Audio device
320 NFC tag section
380 Voice output control section
400 Earphones

## Claims

1. A mobile device (100) comprising:
a wireless communication control section (133) configured to establish, during an NFC handover, a wireless communication path with a destination audio device (200, 300), and
a voice output control section (132) configured to
determine, at a time of communication path establishment with the destination audio device (200, 300), whether a volume setting for connection with the destination audio device (200, 300) is stored; and
when it is determined that the volume setting is stored, cause the wireless communication control section (133) to transmit content information to be output by the destination audio device (200, 300) with the stored volume setting to the destination audio device (200, 300); and
when it is determined that the volume setting is not stored, cause the wireless communication control section (133) to transmit the content information with a volume corresponding to a present set volume of the voice output control section (132) to the destination audio device (200, 300).

2. The mobile device (100) according to claim 1, wherein the voice output control section (132) is further configured to temporarily store the present set volume of the voice output control section (132).

3. The mobile device (100) according to claim 1 or 2, wherein the voice output control section (132) is configured to store respective volume settings of the voice output control section (132) for connection with a plurality of destination audio devices (200, 300), and to use, as the volume setting for connection with the destination audio device (200, 300), a stored volume setting associated with the destination audio device (200, 300).

4. The mobile device (100) according to any one of claims 1 to 3, wherein the voice output control section (132) and the wireless communication control section (133) are further configured, during an NFC handover from a source audio device (200) to a destination audio device (300), to:
output the content information to the source audio device (200) with a volume which is gradually decreased over time, thereby causing the content information output from the source audio device (200) to fade out; and
output the content information to the destination audio device (300) with a volume which is gradually increased over time, thereby causing the content information output from the destination audio device (300) to fade in.

5. The mobile device (100) according to claim 4, wherein a fade-out time and a fade-in time used by the voice output control section (132) are set in advance, and an inclination of the fade-out and of the fade-in is determined on the basis of the respective time and a volume value at a start of the fade-out and at a start of the fade-in.

6. The mobile device (100) according to any one of claims 1 to 5, wherein the mobile device (100) further comprises an NFC reader/writer (170) configured to perform NFC communication with an NFC tag section (220, 320) of an audio device (200, 300), and wherein the wireless communication control section (133) is configured to establish the wireless communication path with the destination audio device (200, 300) on the basis of address information received from the NFC tag section (220, 320) during the NFC communication.

7. The mobile device (100) according to any one of claims 1 to 6, wherein the wireless communication control section (133) is configured, in an NFC handover from a source audio device (200) to a destination audio device (300), to disconnect a wireless communication path with the source audio device (200) and to establish the wireless communication path with the destination audio device (300).

8. The mobile device (100) according to any one of claims 1 to 7, wherein, during the NFC handover, the mobile device (100) is configured to provide an enabling notification image via the mobile device (100).

9. The mobile device (100) according to any one of claims 1 to 8, wherein, during the NFC handover, the wireless communication control section (133) is configured to perform pairing of wireless address information of the mobile device (100) and the destination audio device (200, 300).

10. The mobile device (100) according to any one of claims 1 to 9, wherein, during the NFC handover, the mobile device (100) is configured to provide a pairing notification image via the mobile device (100).

11. The mobile device (100) according to any one of claims 1 to 10, wherein, during the NFC handover, the mobile device (100) is configured to provide a connection notification image via the mobile device (100).

12. The mobile device (100) according to any one of claims 1 to 11, wherein, during the NFC handover, the wireless communication control section (133) is configured to establish the wireless communication path with the destination audio device (200, 300) after a user of the mobile device (100) responds to display of a confirmation dialog image on the mobile device (100).

13. The mobile device (100) according to any one of claims 1 to 12, wherein the mobile device (100) is operable to display an indication of a present output destination.

14. A content presentation method for switching an output destination of content information reproduced by a mobile device (100), the method comprising:
establishing, by a wireless communication control section (133) of the mobile device (100) during an NFC handover, a wireless communication path between the mobile device (100) and a destination audio device (200, 300);
determining, by a voice output control section (132), at a time of communication path establishment with the destination audio device (200, 300), whether a volume setting for connection with the destination audio device (200, 300) is stored; and
when it is determined that the volume setting is stored, causing the wireless communication control section (133) to transmit content information to be output by the destination audio device (200, 300) with the stored volume setting to the destination audio device (200, 300); and
when it is determined that the volume setting is not stored, causing the wireless communication control section (133) to transmit the content information with a volume corresponding to a present set volume of the voice output control section (132) to the destination audio device (200, 300).

15. A non-transitory computer-readable medium storing a computer-readable
program which, when executed by a mobile device (100), causes the mobile device (100) to carry out the method according to claim 14.
